# EUROPEAN PATENT SPECIFICATION

(11) **EP 3 296 129 B1**
(45) Date of publication and mention of the grant of the patent: **18.12.2019**
(21) Application number: 16792800.1
(22) Date of filing: 13.05.2016
(51) Int. Cl.: B60C 13/00, B60C 11/13

(54) **TIRE**
REIFEN
PNEUMATIQUE

(30) Priority: 14.05.2015 JP 2015099530; 14.05.2015 JP 2015099533; 14.05.2015 JP 2015099535
(43) Date of publication of application: 21.03.2018
(73) Proprietor: Bridgestone Corporation, Tokyo 104-8340 (JP)
(72) Inventor: MIYASAKA, Atsushi, Tokyo 104-8340 (JP); IWABUCHI, Sotaro, Tokyo 104-8340 (JP)
(74) Representative: Oxley, Robin John George
(86) International application number: PCT/JP2016/064357
(87) International publication number: WO 2016/182076

(56) References cited:
- EP-A2- 1 075 970
- WO-A1-2011/062241
- WO-A1-2012/111773
- WO-A1-2015/018763
- JP-A- H10 147 114
- JP-A- H11 291 721
- JP-A- H11 291 721
- JP-A- H11 291 722
- JP-A- H11 291 722
- JP-A- 2002 522 294
- JP-A- 2009 512 584
- JP-A- 2011 121 523
- JP-A- 2011 148 338
- JP-A- 2011 148 338
- JP-A- 2013 147 085
- JP-A- 2014 136 487
- JP-A- 2014 205 394
- JP-A- 2015 168 287

## Description

### Technical Field

The present invention relates to a tire having an outer surface formed with a pattern.

### Background Art

Traditionally, fine projections are formed at a side portion of a tire in order to form a contrasting pattern. For example, International Publication (WO) No. 2012/131089 describes technology to obtain high contrast markings on a single-color surface by forming plural projections distributed across the entirety of a pattern. JPH11291721 and JPH11291722 disclose a pneumatic tire provided with a circular annular ornamental unit formed by many small ridges of about 0.3 to 2 mm height. JP2011148338 discloses a pneumatic tire which includes at least one decorative section on a side of the tire. EP1075970 discloses a pneumatic tyre comprising a wide groove having a bottom width of not less than 20 mm disposed in a tread portion.

### SUMMARY OF INVENTION

### Technical Problem

In contrasting patterns such as that described above, light reflection is controlled so as to generate contrast with respect to light-reflecting surroundings. However, in Patent Document 1, the projections are anisotropic, and sometimes the patterned section does not appear uniform when viewed from different angles. More consideration needs to be given to unevenness formed to the pattern in order to control light reflection and enhance visibility.

In consideration of the above circumstances, an object of the present invention is to provide a tire in which visibility is enhanced by raising the uniformity of the appearance of a patterned section in a pattern region on an outer surface of a tire when viewed from different angles.

### Solution to Problem

A tire according to a first aspect of the present invention includes a pattern region, and plural unit patterns. The pattern region is formed at an outer surface of a tire and includes a base. The plural unit patterns are formed within the pattern region, and each of the unit patterns including a nodal point and extension portions having a projection height from the base of from 0.1 mm to 1.0 mm. The extension portions extend in plural directions from the nodal point in plan view. A spacing between nodal points of adjacent unit patterns among the plurality of unit patterns is from 0.2 mm to 1.0 mm. Each of the unit patterns have an asterisk shape having extension portions that extend radially from the nodal point.

The pattern region that includes the base is formed at the outer surface of the tire according to the first aspect. The outer surface of the tire refers to a surface that can be seen from outside the tire, and encompasses a tire side portion, a tread portion, and groove bottoms or groove walls of a tread. The tire of the present invention encompasses both pneumatic tires and non-pneumatic tires.

The plural unit patterns are formed with the pattern region. Each unit pattern is formed including the extension portions having a projection height from the base of from 0.1 mm to 1.0 mm, and extending in plural directions from the nodal point in plan view. The spacing between the nodal points of adjacent unit patterns is from 0.2 mm to 1.0 mm. Forming the unit patterns to the base in this manner enables reflection of light that is incident to the pattern region to be suppressed, enabling contrast to be created between the pattern region and the exterior of the pattern region.

In a tire according to a second aspect, for the adjacent unit patterns, in plan view at least one of the extension portions of one of the unit patterns extends in a different direction to all of the extension portions of another of the unit patterns.

By providing the extension portions of the adjacent unit patterns in different directions to each other in this manner, the reflection direction of light reflected from the pattern region can be made to differ, thus suppressing a concentration of reflected light. This raises the uniformity of the appearance of the patterned section when viewed from different angles, enabling visibility of the outer surface of the tire to be enhanced.

In a tire according to a third aspect, in plan view, a maximum length of each of the unit patterns is larger than the spacing between the nodal points of the adjacent unit patterns.

Configuring the maximum length in the unit patterns in plan view so as to be larger than the spacing between the nodal points of the adjacent unit patterns in this manner makes it easier to arrange the unit patterns close together, thereby enabling the unit patterns to be densely arranged in the pattern region. Arranging the unit patterns densely further suppresses light reflection from the pattern region, enabling visibility to be enhanced.

In a tire according to the first aspect, three or more of the extension portions are present in each at the unit patterns, and respective angles formed between the adjacent extension portions are the same.

The extension portions are able to offer each other well-balanced support as a result of arranging the extension portions of the unit patterns in this manner. Accordingly, the spacings of the unit patterns are less liable to tilt over than in cases in which the angles formed between the extension portions are not the same angles as each other, thereby enabling the durability of the unit patterns to be enhanced.

In a tire according to a fourth aspect, one of the unit patterns and an adjacent unit pattern, of the plurality of unit patterns, are connected together by a connecting portion.

In the tire according to the fourth aspect, one of the unit patterns and another unit pattern adjacent thereto are connected together by the connecting portion. The unit patterns thus support each other through the connecting portion, suppressing the unit patterns from tilting inward, and enabling durability to be enhanced.

In a tire according to a fifth aspect, the connecting portion connects together the plural unit patterns such that plural of the unit patterns are continuous with each other from one end to another end of the pattern region.

Making plural of the unit patterns continuous to each other from one end to the other end of the pattern region in this manner allows air to escape to the exterior of the pattern region through end portions of the continuous unit patterns during vulcanization when manufacturing the tire in a mold. This enables cavities caused by trapped air to be suppressed from arising within the pattern region, thus improving molding characteristics.

In a tire according to a sixth aspect, all of the unit patterns within the pattern region are in communication with an end portion of the pattern region.

Configuring all of the unit patterns within the pattern region in communication with the end portion of the pattern region in this manner enables cavities caused by trapped air to be further suppressed from arising within the pattern region.

In a tire according to an seventh aspect, a continuous zigzag is formed by the extension portions of the connected unit patterns.

Here, a "zigzag" refers to a bent line shape that extends along extension portions extending in different directions to each other with respect to a direction from one end to another end of the pattern region in adjacent unit patterns.

Using the extension portions to form a continuous zigzag shape in this manner enables the reflection angles in which light is reflected to be made to differ despite the continuity, enabling a concentration of reflected light to be suppressed. This thereby raises the uniformity of the appearance of the patterned section when viewed from different angles, enabling visibility to be enhanced.

In a tire according to a eighth aspect, the extension portions each include an apex that is convexly curved at a projection leading end side of the extension portions.

In the tire according to the eighth aspect, the extension portions each include an apex that is curved so as to be convex toward the tire outside. Curving the apex so as to be convex on the projection leading end side in this manner enables the directions of reflected light to be dispersed to a greater extent than in cases in which the apexes have flat faces. The reflection directions in which light is reflected by the pattern region are thus varied, thereby suppressing a concentration of reflected light. This thereby raises the uniformity of the appearance of the patterned section when viewed from different angles, enabling visibility to be enhanced.

In a tire according to a ninth aspect, at least one of the extension portions of the unit patterns has a curved shape.

In the tire according to the ninth aspect, at least one of the extension portion of the unit patterns has a curved shape, thereby suppressing a concentration of reflected light reflected by the extension portion. This thereby raises the uniformity of the appearance when viewed from different angles, enabling visibility to be enhanced. Moreover, a bottom face of the base becomes more difficult to see due to the extension portion having a curving shape, enabling reflection of light incident to the pattern region to be suppressed.

In a tire according to an tenth aspect, the at least one of the extension portions having a curved shape curves such that a leading end of the at least one of the extension portions approaches one of the extension portion of another of the unit patterns.

Due to configuring the leading end of the curved extension portion to curve so as to approach an extension portion of another of the unit patterns in this manner, the bottom face of the base becomes more difficult to see between the curved extension portion and the other extension portion that it approaches, enabling reflection of light incident to the pattern region to be suppressed.

In a tire according to a eleventh aspect, the pattern region is formed at a tire side portion.

The tire side portion can be seen even after the tire has been fitted to a vehicle. Forming the pattern region that generates increased contrast thereby enables the external appearance to be further enhanced.

In a tire according to a twelfth aspect, the pattern region is formed in a groove of a tread.

Here, the groove of the tread encompasses a groove bottom and groove walls. Forming the pattern region in the groove of the tread increases the contrast between the contact surface of the tread and the groove of the tread, making the groove appear deeper, and thus enabling the external appearance of the tread to be further enhanced.

### Advantageous Effects of the Invention

The present invention is capable of raising the uniformity of the appearance of the patterned section when viewed from different angles, enabling visibility to be enhanced in a pattern region on an outer surface of a tire.

### BRIEF DESCRIPTION OF DRAWINGS

Fig. 1 is a side view of a tire according to a first exemplary embodiment.
Fig. 2 illustrates a portion of a pattern region of a tire according to the first exemplary embodiment.
Fig. 3 is an enlarged diagram of a portion of a pattern region of a tire according to the first exemplary embodiment.
Fig. 4A is a cross-section taken along line A-A in Fig. 3.
Fig. 4B is a cross-section taken along line B-B in Fig. 3.
Fig. 5 is an enlarged diagram of a portion of a design on a tire according to the first exemplary embodiment.
Fig. 6A is a cross-section of a portion corresponding to Fig. 4A in a tire according to a modified example of the first exemplary embodiment.
Fig. 6B is a cross-section of a portion corresponding to Fig. 4B in a tire according to a modified example of the first exemplary embodiment.
Fig. 7A is a cross-section of a first extension portion in a tire according to a modified example of the first exemplary embodiment.
Fig. 7B is a cross-section of a first extension portion in a tire according to a modified example of the first exemplary embodiment.
Fig. 7C is a cross-section of a first extension portion in a tire according to a modified example of the first exemplary embodiment.
Fig. 8 is an enlarged diagram of a portion of a pattern region of a tire according to a second exemplary embodiment.
Fig. 9 illustrates a portion of a pattern region of a tire according to the second exemplary embodiment.
Fig. 10 illustrates a portion of a pattern region of a tire according to a third exemplary embodiment.
Fig. 11 is an enlarged diagram of a portion of a pattern region of a tire according to the third exemplary embodiment.
Fig. 12 illustrates a portion of a pattern region of a tire according to a fourth exemplary embodiment.
Fig. 13 is an enlarged diagram of a portion of a pattern region of a tire according to the fourth exemplary embodiment.
Fig. 14 illustrates a portion of a pattern region of a tire according to a fifth exemplary embodiment.
Fig. 15 is an enlarged diagram of a portion of a pattern region of a tire according to the fifth exemplary embodiment.
Fig. 16 illustrates a portion of a pattern region of a tire according to a modified example of the fifth exemplary embodiment.
Fig. 17 is an enlarged diagram of a portion of a pattern region of a tire according to a modified example of the fifth exemplary embodiment.
Fig. 18 illustrates a portion of a pattern region of a tire according to a sixth exemplary embodiment.
Fig. 19 is an enlarged diagram of a portion of a pattern region of a tire according to the sixth exemplary embodiment.
Fig. 20 illustrates a portion of a pattern region of a tire according to a modified example of the sixth exemplary embodiment.
Fig. 21 is an enlarged diagram of a portion of a pattern region of a tire according to a modified example of the sixth exemplary embodiment.
Fig. 22 is an enlarged diagram of a portion of a pattern region of a tire according to another modified example of the sixth exemplary embodiment.
Fig. 23 illustrates a portion of a pattern region of a tire according to a seventh exemplary embodiment.
Fig. 24 is an enlarged diagram of a portion of a pattern region of a tire according to the seventh exemplary embodiment.
Fig. 25 illustrates a portion of a pattern region of a tire according to a modified example of the seventh exemplary embodiment.
Fig. 26 illustrates a portion of a pattern region of a tire according to an eighth exemplary embodiment.
Fig. 27 is an enlarged diagram of a portion of a pattern region of a tire according to the eighth exemplary embodiment.
Fig. 28 illustrates a portion of a pattern region of a tire according to a ninth exemplary embodiment.
Fig. 29 is an enlarged diagram of a portion of a pattern region of a tire according to the ninth exemplary embodiment.
Fig. 30A is a cross-section taken along line A-A in Fig. 29.
Fig. 30B is a cross-section taken along line B-B in Fig. 29.
Fig. 31A is a cross-section of a portion corresponding to Fig. 30A in a tire according to a modified example of the ninth exemplary embodiment.
Fig. 31B is a cross-section of a portion corresponding to Fig. 30B in a tire according to a modified example of the ninth exemplary embodiment.
Fig. 32A is a cross-section of a first extension portion of a tire according to a modified example of the ninth exemplary embodiment.
Fig. 32B is a cross-section of a first extension portion of a tire according to a modified example of the ninth exemplary embodiment.
Fig. 33 is a perspective view and cross-section illustrating a portion of a tread of a tire according to a tenth exemplary embodiment.
Fig. 34 is a Table 1 illustrating results of Test 1.
Fig. 35 is a Table 2 illustrating results of Test 2.
Fig. 36 is a Table 3 illustrating results of Test 3.
Fig. 37 is a Table 4 illustrating results of Test 4.

### DESCRIPTION OF EMBODIMENTS

### First Exemplary Embodiment

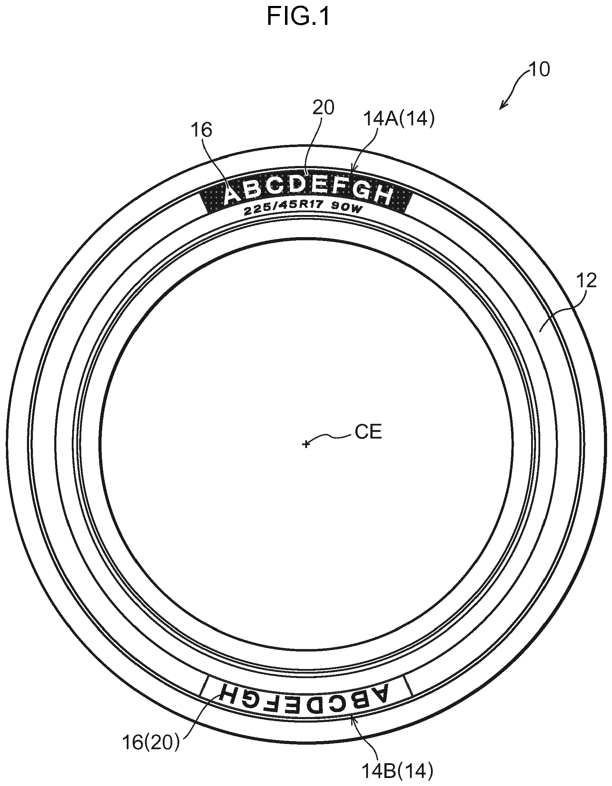

Explanation follows regarding a first exemplary embodiment of the present invention, with reference to the drawings. Fig. 1 is a side view illustrating a tire 10 according to the present exemplary embodiment. In the present exemplary embodiment, a tire circumferential direction is indicated by C, and a tire radial direction is indicated by R.

A tire side portion 12 of the tire 10 is formed with designs 14. The designs 14 are configured in belt shaped circular arcs, and are formed at two locations at symmetrical positions on either side of a tire center axis CE (see Fig. 1). A pattern region 20 and a text region 16 are arranged within the design 14. The text region 16 displays text, such as "ABCDEFGH", displayed in a smooth plane. In the design 14A on the upper side of the page in Fig. 1, the pattern region 20 configures a type of decorative strip at locations that are not part of the text region 16 of the design 14A, and is formed so as to surround the text region 16. On the other hand, in the design 14B on the lower side of the page in Fig. 1, the pattern region 20 is the same region as the text region 16 of the design 14B, and portions that are not within the text region 16 of the design 14B are configured similarly to the outer surface of the tire side portion 12 not within the designs 14. In the present exemplary embodiment, explanation is given regarding the design 14A. Note that the design 14 including the pattern region 20 may be formed using laser processing to provide corresponding recesses and projections inside a tire mold. Moreover, the pattern region 20 is preferably disposed further to the tire radial direction R outside than a maximum width portion of the tire (a portion where the straight-line distance between tire side portions is greatest).

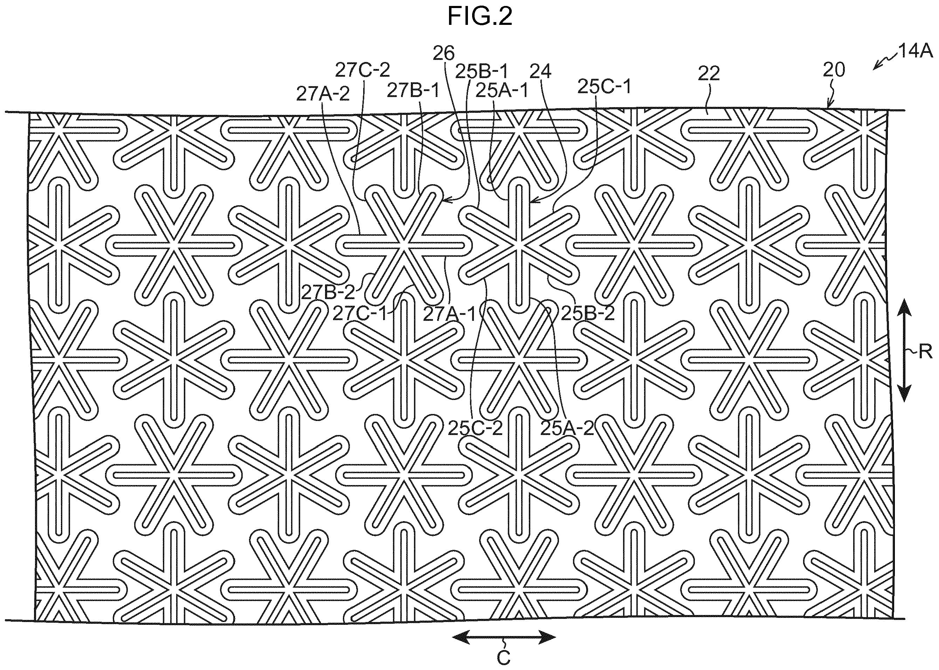

As illustrated in Fig. 2, the pattern region 20 includes a base 22. The base 22 forms a bottom face in the pattern region 20, and first asterisk projections 24 and second asterisk projections 26 are formed as unit patterns projecting out from the base 22. Note that from the perspective of air resistance, the first asterisk projections 24 and the second asterisk projections 26 preferably do not project out from the surface of the tire side portion 12 (the surface not within the design 14).

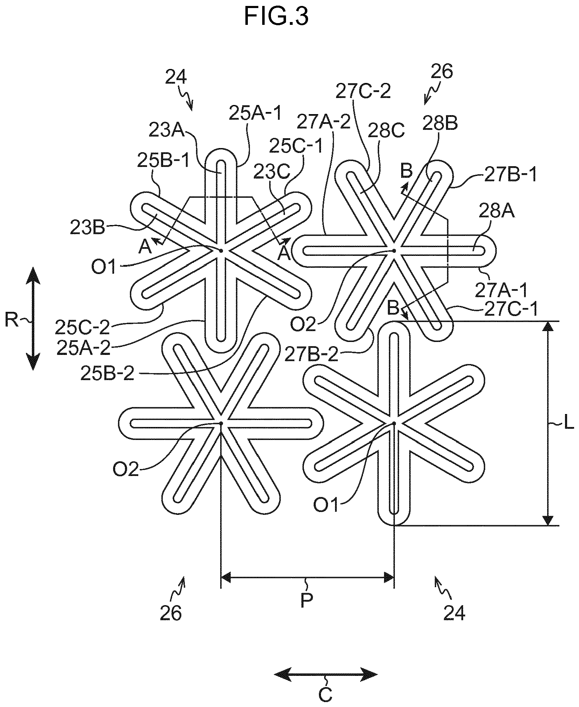

As illustrated in Fig. 3, each first asterisk projection 24 is configured by first extension portions 25A-1, 25A-2, second extension portions 25B-1, 25B-2, and third extension portions 25C-1, 25C-2, each having the same shape but extending in a straight line in a different direction from a center O1, serving as a bend point. In the following explanation, the six extension portions are referred to collectively as the "extension portions 24E". A linear shape that bends at the center O1 is configured by any one of the extension portions 24E and another of the extension portions 24E (with the exception of extension portions 24E extending in opposite directions to each other from the center O1). The first extension portion 25A-1 and the first extension portion 25A-2 extend in opposite directions to each other from the center O1, such that the first extension portion 25A-1 and the first extension portion 25A-2 configure a continuous straight line shape. In the following explanation, the first extension portion 25A-1 and the first extension portion 25A-2 are referred to collectively as the "first extension portions 25A". Likewise, the second extension portion 25B-1 and the second extension portion 25B-2 extend in opposite directions to each other from the center O1, such that the second extension portion 25B-1 and the second extension portion 25B-2 configure a continuous straight line shape. In the following explanation, the second extension portion 25B-1 and the second extension portion 25B-2 are referred to collectively as the "second extension portions 25B". Likewise, the third extension portion 25C-1 and the third extension portion 25C-2 extend in opposite directions to each other from the center O1, such that the third extension portion 25C-1 and the third extension portion 25C-2 configure a continuous straight line shape. In the following explanation, the third extension portion 25C-1 and the third extension portion 25C-2 are referred to collectively as the "third extension portions 25C".

Each of the six extension portions 24E forms angles of 60° with the adjacent extension portions 24E. In other words, in the first asterisk projection 24, the six extension portions 24E form a shape extending from the center O1 in a radial pattern. In the first asterisk projection 24, the first extension portion 25A-1 and the first extension portion 25A-2 extend substantially along the tire radial direction R.

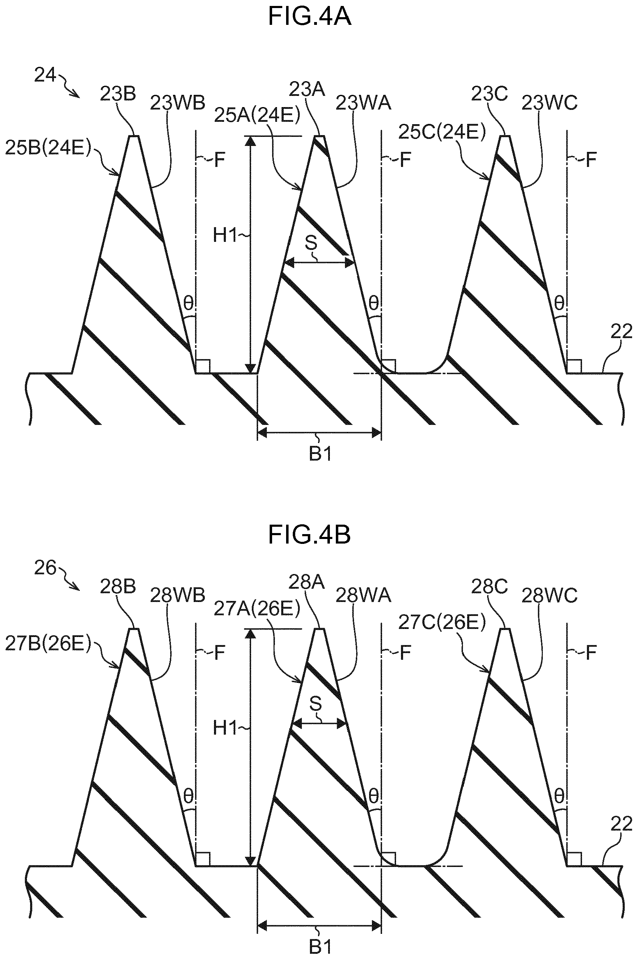

As illustrated in Fig. 4A and Fig. 4B, in the first asterisk projection 24, each of the extension portions 24E is configured with a substantially isosceles triangle shaped cross-section profile having a flattened apex as sectioned in a direction orthogonal to the extension direction of the extension portion 24E. In the following explanation, the apexes of the first extension portions 25A are referred to as first apexes 23A, the apexes of the second extension portions 25B are referred to as second apexes 23B, and the apexes of the third extension portion 25C are referred to as third apexes 23C. The height from the base 22 to each of the first apexes 23A, the second apexes 23B, and the third apexes 23C (referred to below as the "projection height H1") is set from 0.1 mm to 1.0 mm. In the following explanation, the first apexes 23A, the second apexes 23B, and the third apexes 23C are referred to collectively as the first apexes 23A to the third apexes 23C. Note that the projection height H1 is more preferably set in a range from 0.2 mm to 0.8 mm.

As illustrated in Fig. 4A, in the first asterisk projection 24, the base 22 has a flat profile between the first extension portions 25A and the second extension portions 25B, and the base 22 has a curved face profile between the first extension portions 25A and the third extension portion 25C. Moreover, as illustrated in Fig. 4B, in the second asterisk projection 26, described later, the base 22 has a flat profile between first extension portions 27A and second extension portions 27B, and the base 22 has a curved face profile between the first extension portions 27A and third extension portions 27C. Configuring the base 22 with a curved face profile suppresses reflection of incident light, thus increasing the contrast with the exterior of the pattern region 20, and enhancing visibility.

A distance S between the side wall faces on either side increases on progression from the apex side toward the base 22, as viewed in cross-section taken orthogonally to the respective extension directions of a first side wall face 23WA configuring an inclined edge of the isosceles triangle profile of the first extension portion 25A, a second side wall face 23WB configuring an inclined edge of the isosceles triangle profile of the second extension portion 25B, and a third side wall face 23WC configuring an inclined edge of the isosceles triangle profile of the third extension portion 25C. The first side wall face 23WA, the second side wall face 23WB, and the third side wall face 23WC each form an angle θ with respect to a hypothetical perpendicular plane F that is perpendicular to the base 22. The angle θ is preferably set within a range from 5° to 30°, and is more preferably set within a range from 15° to 25°. If the angle θ is an angle larger than 30°, the proportion of light reflected by the first side wall face 23WA to the third side wall face 23WC that returns to the outside from between the extension portions 24E becomes greater, detracting from the enhancement in visibility. Namely, light is reflected, reducing the difference in contrast with the exterior of the pattern region 20, and thus detracting from the enhancement in visibility. On the other hand, if the angle θ is an angle smaller than 5°, the extension portions 24E become liable to tilt over. Accordingly, in consideration of the effect of suppressing light incident between the extension portions 24E from being reflected and returning to the outside from between the extension portions 24E, and also in consideration of the durability of the extension portions 24E, the angle θ is preferably set to from 5° to 30°.

Moreover, in the extension portions 24E, the projection height H1 is preferably 0.8 to 6 times a base edge length B1 of the isosceles triangle (the distance between bases of the side wall faces at the base 22). If the projection height H1 is less than 0.8 times the base edge length B1, the proportion of light reflected at the first side wall face 23WA to the third side wall face 23WC that returns to the outside from between the extension portions 24E becomes greater, detracting from the enhancement in visibility. Namely, light is reflected, reducing the difference in contrast with the exterior of the pattern region 20, and thus detracting from the enhancement in visibility. On the other hand, if the projection height H1 is greater than 6 times the base edge length B1, the first side wall face 23WA to the third side wall face 23WC form an angle that is almost perpendicular to the base 22, making the extension portions 24E liable to tilt over. Accordingly, in consideration of the effect of suppressing reflected light of the light incident between the extension portions 24E from returning to the outside from between the extension portions 24E, and also in consideration of the durability of the extension portions 24E, the projection height H1 is preferably from 0.8 times to 6 times the base edge length B1.

The second asterisk projections 26 have the same shape as the first asterisk projections 24, and in plan view, the second asterisk projections 26 are arranged rotated 90° about the center O1 with respect to the first asterisk projections 24. In each second asterisk projection 26, portions respectively corresponding to the first extension portions 25A-1, 25A-2, the second extension portions 25B-1, 25B-2, the third extension portions 25C-1, 25C-2, and the center O1 of the first asterisk projection 24 are referred to as first extension portions 27A-1, 27A-2, second extension portions 27B-1, 27B-2, third extension portions 27C-1, 27C-2, and a center O2. In the following explanation, the six extension portions above are referred to collectively as the "extension portions 26E". Moreover, portions corresponding to the first apexes 23A, the second apexes 23B, and the third apexes 23C are referred to as first apexes 28A, second apexes 28B, and third apexes 28C. In the following explanation, the first apexes 28A, the second apexes 28B, and the third apexes 28C are referred to collectively as the first apexes 28A to the third apexes 28C. Moreover, portions corresponding to the first side wall faces 23WA, the second side wall faces 23WB, and the third side wall faces 23WC are referred to as first side wall faces 28WA, second side wall faces 28WB, and third side wall faces 28WC. In the following explanation, the first side wall faces 23WA, the second side wall faces 23WB, and the third side wall faces 23WC are referred to collectively as the first side wall faces 23WA to the third side wall faces 23WC, and the first side wall faces 28WA, the second side wall faces 28WB, and the third side wall faces 28WC are referred to collectively as the first side wall faces 28WA to the third side wall faces 28WC. Due to arranging the second asterisk projections 26 as described above, the respective extension portions 24E and the respective extension portions 26E extend in different directions to each other.

The first asterisk projections 24 and the second asterisk projections 26 are lined up alternately in rows along both the tire radial direction R and the tire circumferential direction C so as to cover the entire pattern region 20. Leading ends of the first extension portions 25A-1, 25A-2 of the first asterisk projections 24 are respectively inserted between the second extension portions 27B-2 and the third extension portions 27C-1, and between the second extension portions 27B-1 and the third extension portions 27C-2, of the second asterisk projections 26 adjacent in the tire radial direction R. Leading ends of the first extension portions 27A-1, 27A-2 of the second asterisk projections 26 are respectively inserted between the second extension portions 25B-1 and the third extension portions 25C-2, and between the second extension portions 25B-2 and the third extension portions 25C-1, of the first asterisk projections 24 adjacent in the tire circumferential direction C.

A spacing (referred to below as a "spacing P") between the center O1 and the center O2 of the first asterisk projections 24 and the second asterisk projections 26 adjacent in the tire radial direction R and in the tire circumferential direction C is set to from 0.2 mm to 1.0 mm. An extension direction length from the leading end of the first extension portion 25A-1 to the leading end of the first extension portion 25A-2, an extension direction length from the leading end of the second extension portion 25B-1 to the leading end of the second extension portion 25B-2, and an extension direction length from the leading end of the third extension portion 25C-1 to the leading end of the third extension portion 25C-2 are equal to each other, and in plan view, this configures the maximum length in the first asterisk projection 24. This length is referred to below as the "extension length L". The extension length L is set longer than the spacing P. Note that an extension direction length from the leading end of the first extension portion 27A-1 to the leading end of the first extension portion 27A-2, an extension direction length from the leading end of the second extension portion 27B-1 to the leading end of the second extension portion 27B-2, and an extension direction length from the leading end of the third extension portion 27C-1 to the leading end of the third extension portion 27C-2 configure the maximum length in the second asterisk projection 26 in plan view, and are the same length as the extension length L. If the spacing P is less than 0.2 mm, the lengths of the extension portions 24E, 26E become too short, making molding characteristics difficult to secure during manufacture. On the other hand, if the spacing P exceeds 1.0 mm, the first asterisk projection 24 and the second asterisk projection 26 are not arranged densely, detracting from the enhancement in visibility of the pattern region 20 due to light being reflected from the base 22. The spacing P is therefore set from 0.2 mm to 1.0 mm. Note that the spacing P is more preferably set within a range of from 0.2 mm to 0.8 mm. Adjacent first asterisk projections 24 and second asterisk projections 26 are arranged discretely to each other.

Next, explanation follows regarding operation and advantageous effects of the tire according to the present exemplary embodiment.

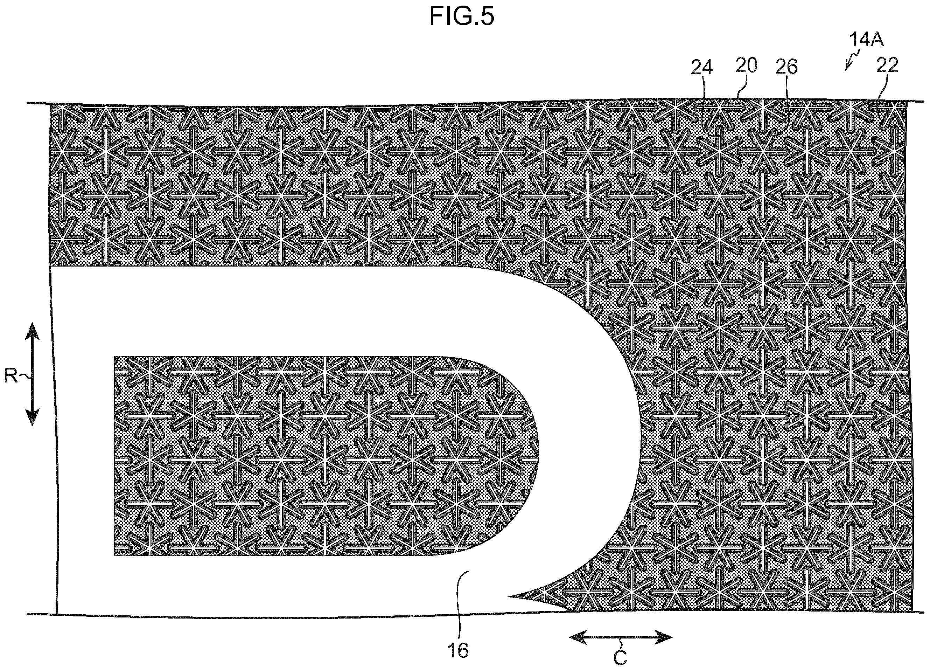

As described above, in the pattern region 20 of the tire side portion 12, light that is incident to the first asterisk projections 24 and the second asterisk projections 26 formed within the pattern region 20 hits the adjacent first side wall faces 23WA to third side wall faces 23WC and the first side wall faces 28WA to the third side wall faces 28WC. The light attenuates as it is reflected back and forth between the first side wall faces 23WA to third side wall faces 23WC and the first side wall faces 28WA to the third side wall faces 28WC. Accordingly, little light is reflected back outside the pattern region 20, such that the pattern region 20 appears black, as illustrated in Fig. 5, whilst other regions (the text region 16 and the rest of the tire side portion 12) appear white in comparison. This thereby enables contrast to be created between the pattern region 20 and the other regions. By increasing the contrast between the pattern region 20 and the text region 16 surrounded by the pattern region 20 as in the present exemplary embodiment, the text region 16 can be seen clearly, enabling visibility to be enhanced.

Moreover, in the pattern region 20 of the present exemplary embodiment, the first asterisk projections 24 and the second asterisk projections 26 are lined up alternately along the tire radial direction R and the tire circumferential direction C, and the extension portions 24E and the extension portions 26E extend in different directions to each other. This thereby enables the light reflected by the pattern region 20 to be reflected in different directions, thus suppressing a concentration of reflected light. This raises the uniformity of the appearance of the patterned section when viewed from different angles, enabling visibility to be enhanced.

Moreover, in the present exemplary embodiment, the extension length L is longer than the spacing P between the adjacent first asterisk projections 24 and second asterisk projections 26. This makes it easier to arrange the first asterisk projection 24 and the second asterisk projection 26, serving as unit patterns, close together, enabling the unit patterns to be densely arranged in the pattern region 20. Arranging the unit patterns densely further suppresses light reflection from the pattern region 20, enabling visibility to be enhanced.

Moreover, in the present exemplary embodiment, the first asterisk projections 24 are configured by the six extension portions 24E that are connected together at the center O1 and that extend in different directions to each other. The second asterisk projections 26 are configured by the six extension portions 26E that are connected together at the center O2 and that extend in different directions to each other. The first asterisk projections 24 and the second asterisk projections 26 are therefore not liable to tilt over, enabling the durability of the individual first asterisk projections 24 and second asterisk projections 26 to be enhanced. Moreover, since the extension portions 24E, 26E extend in different directions to each other within the same unit pattern (first asterisk projection 24, second asterisk projection 26), the angle of reflection of reflected light can be varied, suppressing concentration of reflected light. This raises the uniformity of the appearance of the patterned section when viewed from different angles, enabling visibility to be enhanced.

Moreover, the first asterisk projection 24 and the second asterisk projection 26 are disposed independently of each other (discretely to one other), enabling the propagation of cracks to be suppressed should cracks occur in the pattern region 20.

Moreover, in the first asterisk projections 24 and the second asterisk projections 26, the angles formed between the extension portions 24E and the extension portions 26E are configured as uniform angles (60°). The extension portions 24E and the extension portions 26E thus offer each other well-balanced support, such that the first asterisk projection 24 and the second asterisk projection 26 are less liable to tilt over than in configurations in which the angles formed between the extension portions 24E and the extension portions 26E are not uniform angles, thereby enabling durability to be enhanced.

Moreover, the extension portions 24E and the extension portions 26E have substantially isosceles triangle cross-section profiles, and when the first to third side wall faces 23WA to 23WC, 28WA to 28WC are viewed in cross-section taken orthogonally to the respective extension directions, the distance S between the side wall faces on either side increases on progression from the apex side toward the base 22. Accordingly, the spacing between the adjacent apexes 23A to 23C, 28A to 28C is wider than a spacing on the base 22 side, allowing light to be incident between the extension portions 24E and between the extension portions 26E over a wide range. The light that is incident between the extension portions 24E and between the extension portions 26E is reflected back and forth between the side wall faces, enabling reflected light to be suppressed from returning to the outside from between the extension portions.

Moreover, configuring the cross-sections of the extension portions 24E and the extension portions 26E as sectioned in a direction orthogonal to their respective extension directions in the manner described above facilitates removal from the mold during manufacture, enabling molding characteristics to be enhanced. As a result, there is little inward tilting of the first asterisk projections 24 and the second asterisk projections 26, enabling durability to be enhanced.

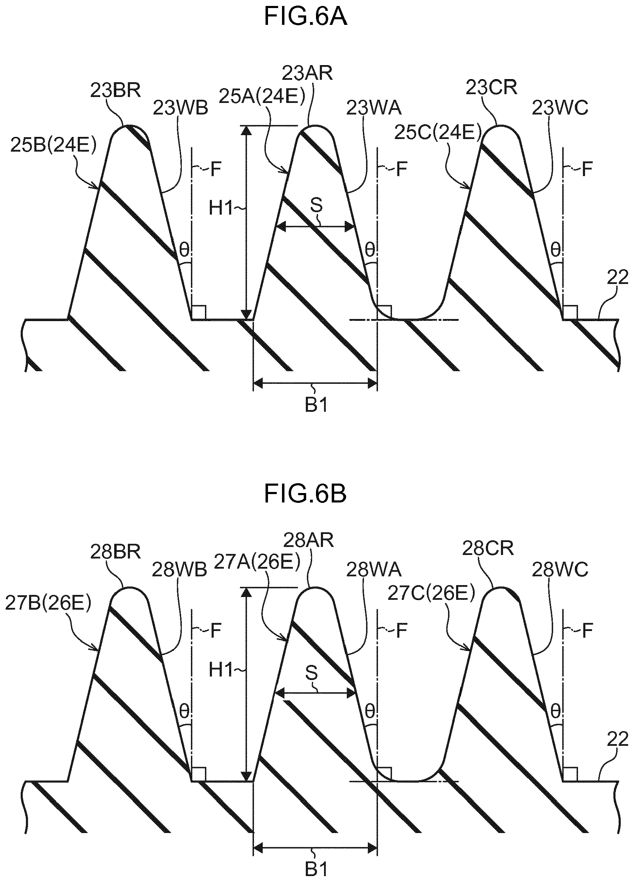

Note that in the present exemplary embodiment, the cross-sections of the extension portions 24E and the extension portions 26E as sectioned in a direction orthogonal to their respective extension directions are configured with substantially isosceles triangle profiles. However, configuration may be made with other shapes. As illustrated in Fig. 6A and Fig. 6B, for example, the vicinity of the first apexes 23A to the third apexes 23C and the first apexes 28A to the third apexes 28C may have curved face profiles to configure first apexes 23AR to third apexes 23CR, and first apexes 28AR to third apexes 28CR.

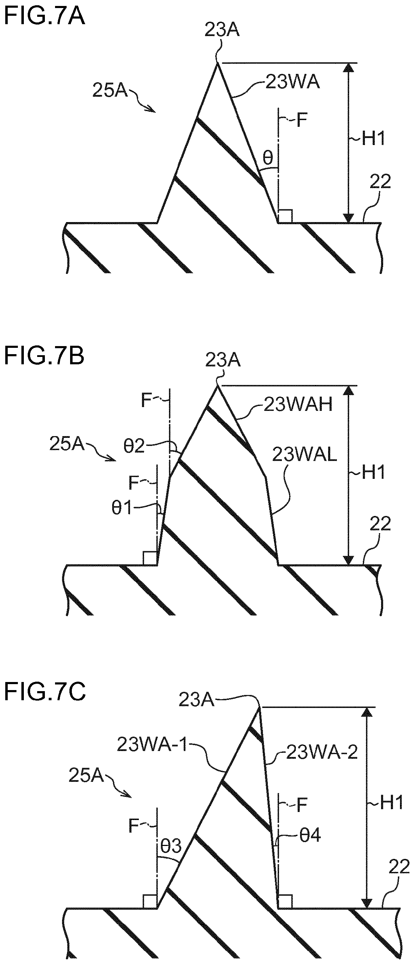

Moreover, as illustrated in Fig. 7A, the cross-section profiles of the extension portions 24E and the extension portions 26E may be configured as isosceles triangles that come to a point at the apexes 23A to 23C. Configuring isosceles triangles that come to a point enables reflection by a flattened apex to be suppressed, enabling visibility to be enhanced. Moreover, as illustrated in Fig. 7B, an angle θ1 of a first side wall face 23WAL on the base 22 side may be set smaller than an angle θ2 on a first side wall face 23WAH on the apex side. Setting the angle θ1 smaller than the angle θ2 makes the extension portions 24E and the extension portions 26E less liable to tilt over, enabling durability to be enhanced. Moreover, as illustrated in Fig. 7C, an angle θ3 of one first side wall face 23WA-1 may be different to an angle θ4 of another first side wall face 23WA-2. Configuring the angle θ3 and the angle θ4 as different angles suppresses concentration of reflected light. This raises the uniformity of the appearance of the patterned section when viewed from different angles, enabling visibility to be enhanced. Moreover, in such cases, the projection height H1 from the base 22 to each of the first apexes 23A to the third apexes 23C and the first apexes 28A to the third apexes 28C is similarly set to 0.1 mm or greater. Note that only the first extension portion 25A is illustrated in Fig. 7A, Fig. 7B, and Fig. 7C.

Moreover, in the present exemplary embodiment, the unit patterns (first asterisk projection 24, second asterisk projection 26) are configured by the extension portions 24E and the extension portions 26E that extend in six directions each. However, a unit pattern may be formed by extension portions extending in two different directions, or a unit pattern may be formed by extension portions extending in three or more different directions. Moreover, in cases in which the extension portions extend in three or more different directions, the angles formed between adjacent extension portions may be uniform angles, or may be different angles. Configuring uniform angles such as in the present exemplary embodiment enables the extension portions to offer each other well-balanced support.

### Second Exemplary Embodiment

Next, explanation follows regarding a second exemplary embodiment of the present invention. In the present exemplary embodiment, portions similar to those of the first exemplary embodiment are allocated the same reference numerals, and detailed explanation thereof is omitted.

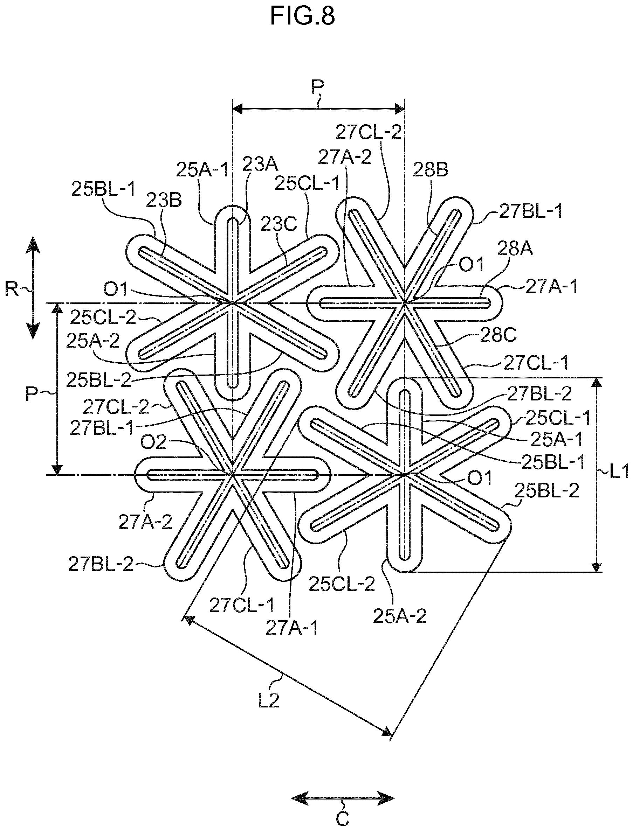

As illustrated in Fig. 8, the main difference in a tire 10 of the present exemplary embodiment is that in the first asterisk projection 24 and the second asterisk projection 26 of the first exemplary embodiment, an extension length L2 from the leading end of the second extension portion 25B-1 to the leading end of the second extension portion 25B-2, an extension length L2 from the leading end of the second extension portion 27B-1 to the leading end of the second extension portion 27B-2, an extension length L2 from the leading end of the third extension portion 25C-1 to the leading end of the third extension portion 25C-2, and an extension length L2 from the leading end of the third extension portion 27C-1 to the leading end of the third extension portion 27C-2 are longer than an extension length L1 from the leading end of the first extension portion 25A-1 to the leading end of the first extension portion 25A-2 and an extension length L1 from the leading end of the first extension portion 27A-1 to the leading end of the first extension portion 27A-2. In the present exemplary embodiment, the reference numerals of the second extension portions 25B, 27B and the third extension portions 25C, 26C are suffixed with the letter "L", to give second extension portions 25BL, 27BL, and third extension portions 25CL, 27CL.

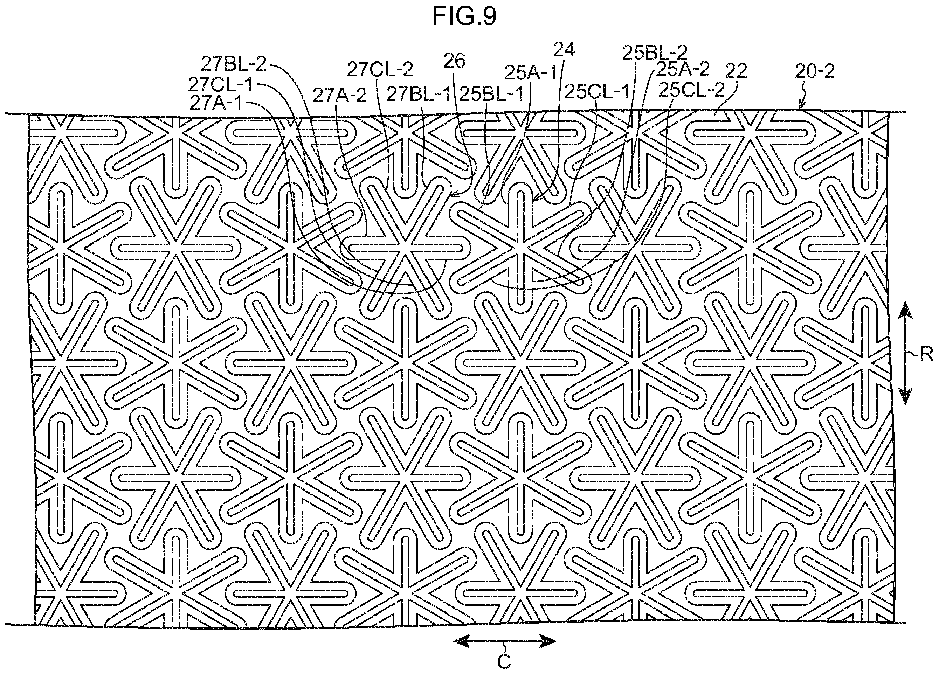

As also illustrated in Fig. 9, the second extension portions 25BL of the first asterisk projection 24 are inserted between the first extension portions 27A and the second extension portions 27BL of the adjacent second asterisk projections 26. The third extension portions 25CL of the first asterisk projection 24 are inserted between the first extension portions 27A and the third extension portions 27CL of the adjacent second asterisk projections 26. The second extension portions 27BL of the second asterisk projection 26 are inserted between the first extension portions 25A and the second extension portions 25BL of the adjacent first asterisk projections 24. The third extension portions 27CL of the second asterisk projection 26 are inserted between the first extension portions 25A and the third extension portions 25CL of the adjacent first asterisk projections 24.

In a pattern region 20-2 of the present exemplary embodiment, the extension length L2 of the second extension portions 25BL, 27BL and the third extension portions 25CL, 26CL is set longer than the extension length L1 of the first extension portions 25A, 27A, thereby reducing the surface area of flat portions of the base 22. This thereby enables the directions in which light incident to the pattern region 20-2 is reflected to be varied, suppressing a concentration of reflected light. This thereby raises the uniformity of the appearance of the patterned section when viewed from different angles, enabling visibility to be enhanced.

### Third Exemplary Embodiment

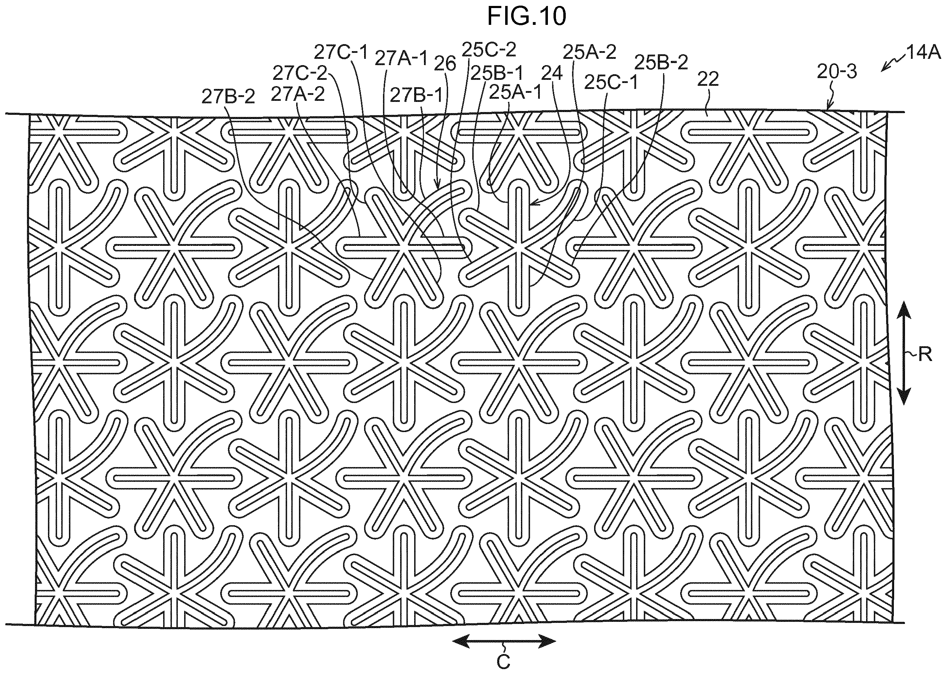

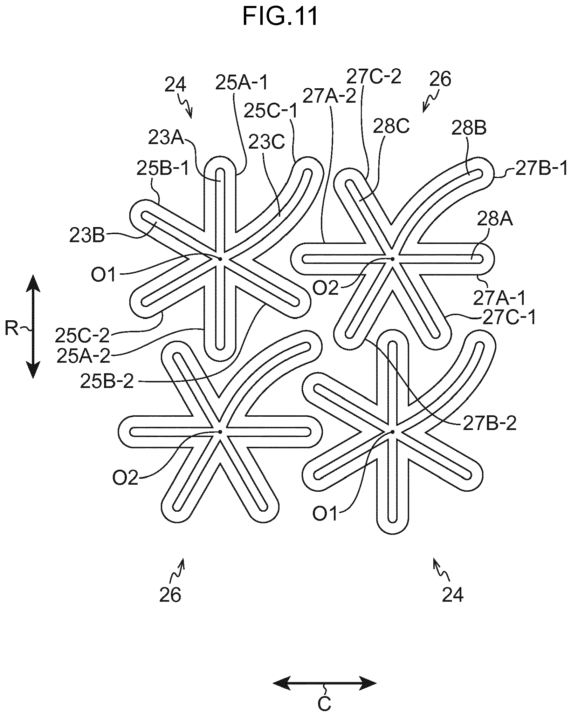

In a tire 10 of the present exemplary embodiment, as illustrated in Fig. 10, the third extension portion 25C-1 of the first asterisk projection 24 of the first exemplary embodiment is curved so as to approach the leading end of the third extension portion 25C-2 of another, adjacent first asterisk projection 24. As illustrated in Fig. 11, the extension length of the third extension portion 25C-1 is longer than that of the other extension portions. Moreover, in the tire 10 of the present exemplary embodiment, the second extension portion 27B-1 of the second asterisk projection 26 of the first exemplary embodiment is curved so as to approach the leading end of the second extension portion 27B-2 of another, adjacent second asterisk projection 26. The extension length of the second extension portion 27B-1 is longer than that of the other extension portions.

In a pattern region 20-3 of the present exemplary embodiment, the third extension portion 25C-1 and the second extension portion 27B-1 are curved, thereby suppressing a concentration of reflected light reflected by the third extension portion 25C-1 and the second extension portion 27B-1. This thereby raises the uniformity of the appearance when viewed from different angles, enabling visibility to be enhanced. Moreover, since the third extension portion 25C-1 and the second extension portion 27B-1 have longer extension lengths, the bottom face of the base 22 becomes more difficult to see, enabling reflection of light incident to the pattern region 20-3 to be suppressed.

### Fourth Exemplary Embodiment

Explanation follows regarding a fourth exemplary embodiment of the present invention, with reference to the drawings. In the present exemplary embodiment, portions similar to those of the first or second exemplary embodiments are allocated the same reference numerals, and detailed explanation thereof is omitted.

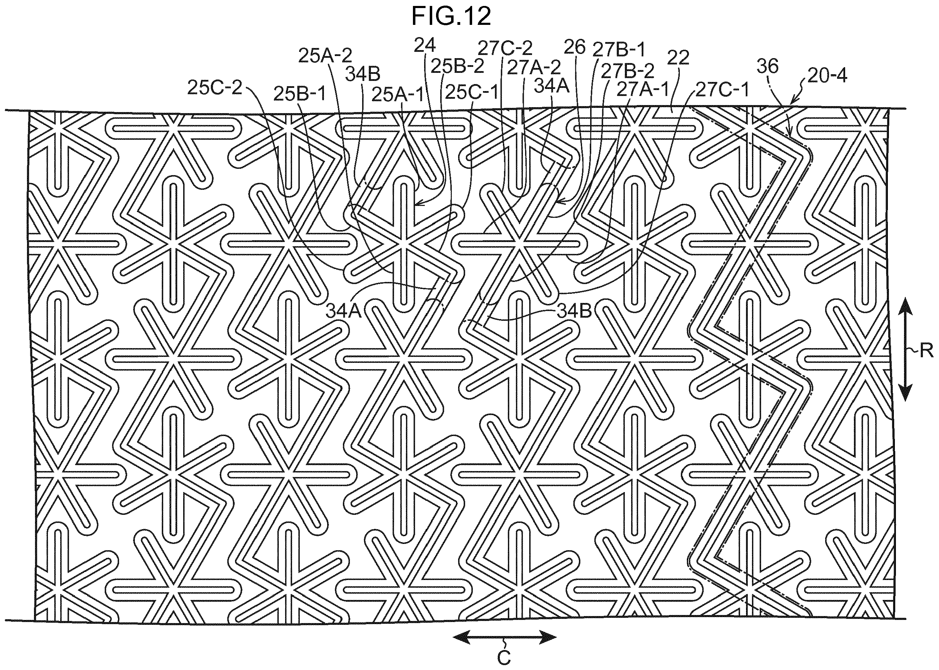

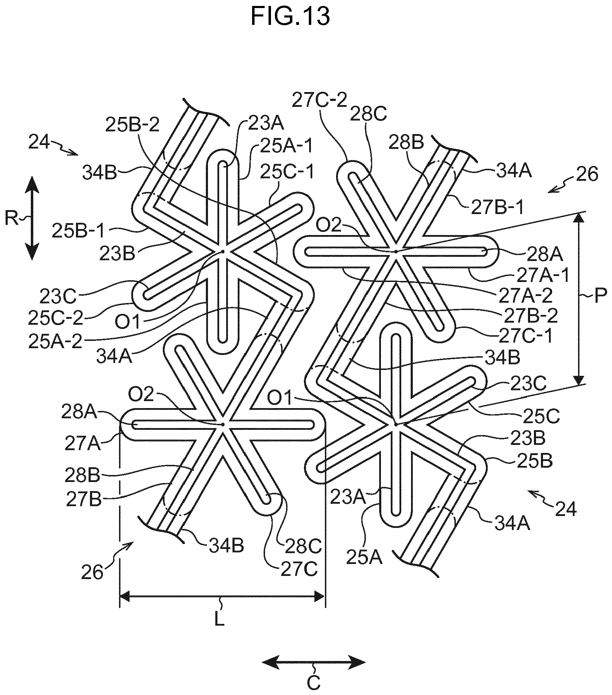

In a tire 10 of the present exemplary embodiment, the pattern region 20 of the first exemplary embodiment is modified to form a pattern region 20-4. As illustrated in Fig. 12 and Fig. 13, in the pattern region 20-4, connecting portions 34A are formed between the second extension portions 25B-2 and the second extension portions 27B-1. Moreover, connecting portions 34B are formed between the second extension portions 25B-1 and the second extension portions 27B-2. The connecting portions 34A, 34B extend from both leading ends of the second extension portion 27B in the same direction as the second extension portion 27B, and are connected to the respective leading ends of the second extension portions 25B adjacent in the tire radial direction R so as to form 90° angles therewith. In the following explanation, the connecting portions 34A and the connecting portions 34B are referred to collectively as the connecting portions 34.

The connecting portions 34 have the same cross-section profile as the second extension portion 27B. The connecting portions 34, the second extension portion 27B, and the second extension portions 25B are integrally connected together, and the second extension portion 27B and the connecting portion 34 configure a straight line portion that extends for longer than the second extension portion 25B. The second extension portion 27B and the second extension portion 25B are continuous to one another in the tire radial direction R through the connecting portions 34. In the following explanation, a single continuous projection configured by the second extension portions 27B, connecting portions 34, and second extension portions 25B is referred to as a continuous projection 36.

The continuous projection 36 is formed with a zigzagging shape having an amplitude in the tire circumferential direction C, and passing through the centers O1, O2 of the first asterisk projections 24 and the second asterisk projections 26. Overall, the continuous projection 36 extends in the tire radial direction R. The lengths of straight lines passing through the second extension portions 27B of the zigzag are longer than those of the second extension portions 25B. The continuous projection 36 is formed in a continuous zigzagging shape from an inside end to an outside end of the pattern region 20-4 in the tire radial direction R.

In the pattern region 20-4 of the present exemplary embodiment, the first asterisk projections 24 and the second asterisk projections 26 are connected through the connecting portions 34, such that the first asterisk projections 24 and the second asterisk projections 26 support each other through the connecting portions 34. This thereby suppresses the first asterisk projections 24 and the second asterisk projections 26 from tilting inward, and enables durability to be enhanced. Moreover, the second extension portions 25B, 27B are connected together to form the continuous projection 36 that runs continuously from the inside end to the outside end of the pattern region 20-4 in the tire radial direction R, thereby allowing air to escape to the exterior of the pattern region 20-4 through end portions of the continuous projections 36 during vulcanization. This enables cavities caused by trapped air to be suppressed from arising within the pattern region 20-4.

Since the continuous projection 36 extends in a zigzagging shape, the reflection angles in which light is reflected can be made to differ despite the continuity, enabling a concentration of reflected light to be suppressed. This thereby raises the uniformity of the appearance when viewed from different angles, enabling visibility to be enhanced.

### Fifth Exemplary Embodiment

Next, explanation follows regarding a fifth exemplary embodiment of the present invention. In the present exemplary embodiment, portions similar to those of the first to the fourth exemplary embodiments are allocated the same reference numerals, and detailed explanation thereof is omitted.

In a tire 10 of the present exemplary embodiment, the pattern region 20 of the first exemplary embodiment is modified to form a pattern region 20-5. The main difference lies in the point that the pattern region 20-5 does not include the connecting portion 34A of the fourth exemplary embodiment, and is instead provided with a connecting portion 38.

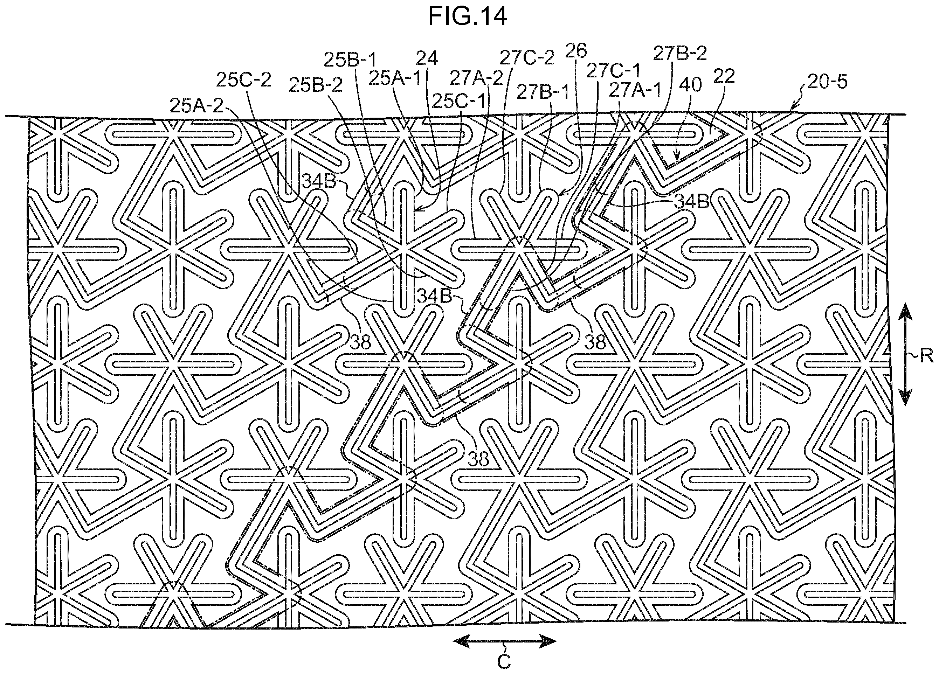

As illustrated in Fig. 14, in the present exemplary embodiment, connecting portions 34B similar to those of the fourth exemplary embodiment are formed between the second extension portions 25B-1 and the second extension portions 27B-2.

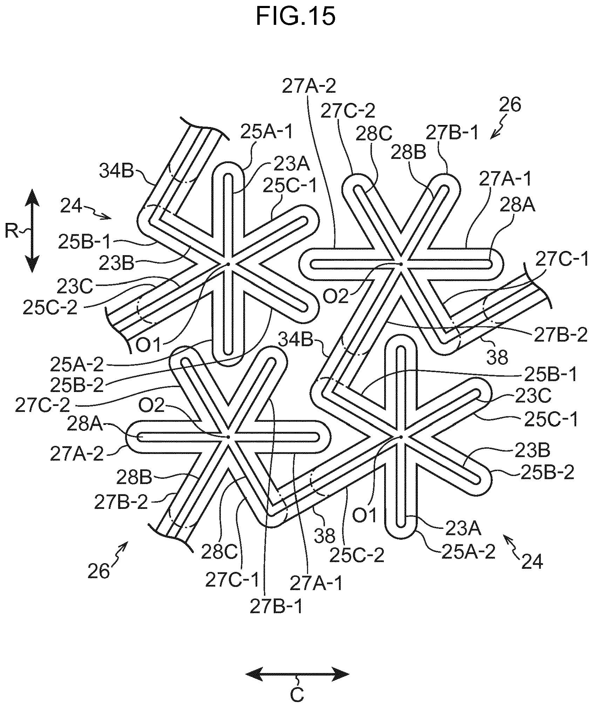

The connecting portion 38 is formed between the third extension portion 25C-2 and the third extension portion 27C-1. As also illustrated in Fig. 15, the connecting portion 38 extends from the leading end of the third extension portion 25C-2 in the same direction as the third extension portion 25C-2, and is connected to the leading end of the third extension portion 27C-1 adjacent in the tire circumferential direction C so as to form an angle of 90°. The connecting portion 38 has the same cross-section profile as the third extension portion 25C. The connecting portion 38 is integrally connected to the third extension portion 25C-2 and the third extension portion 27C-1. The third extension portion 25C is lengthened by the connecting portion 38 so as to form a straight line portion that is longer than the other extension portions. The connecting portion 34B is integrally connected to the second extension portion 27B-2 and the second extension portion 25B-1. The second extension portion 27B is lengthened by the connecting portion 34B so as to form a straight line portion that is longer than the other extension portions.

The second extension portion 27B-2 and the second extension portion 25B-1 are configured so as to be continuous to each other along the tire radial direction R through the connecting portion 34B. The third extension portion 27C-1 and the third extension portion 25C-2 are configured so as to be continuous to each other along the tire circumferential direction C through the connecting portion 38. Moreover, the second extension portions 27B-2, the connecting portions 34B, the second extension portions 25B-1, the third extension portions 25C-2, the connecting portions 38, and the third extension portions 27C-1 are connected together in this sequence to form a continuous single continuous projection 40. The continuous projection 40 passes through the centers O1, O2 of the first asterisk projections 24 and the second asterisk projections 26, and bends back between adjacent extension portions at each center O1, O2 to extend toward other first asterisk projections 24 and second asterisk projections 26. Overall, the continuous projection 40 extends at an angle inclined with respect to the tire radial direction R. The continuous projection 40 is formed continuously from an inside end to an outside end of the pattern region 20-5 in the tire radial direction R.

In the pattern region 20-5 of the present exemplary embodiment, adjacent first asterisk projections 24 and second asterisk projections 26 are connected together by the connecting portions 34B and the connecting portions 38 that extend in different directions to each other. This thereby enables light to be reflected in different directions by the connecting portions, thus raising the uniformity of the appearance when viewed from different angles, and thereby enabling visibility to be enhanced. Similar advantageous effects to those of the fourth exemplary embodiment can also be obtained.

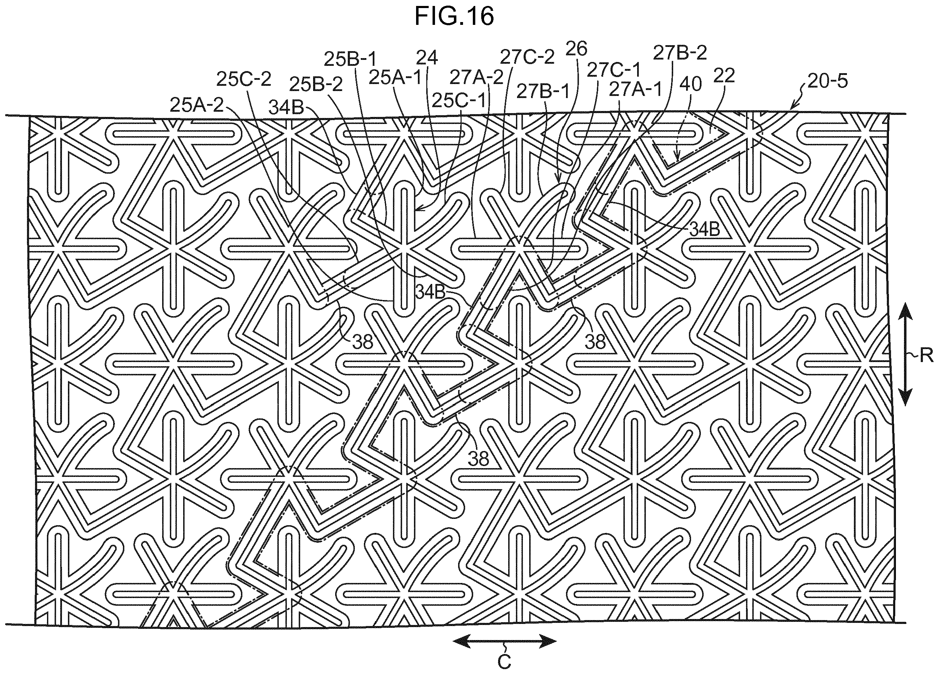

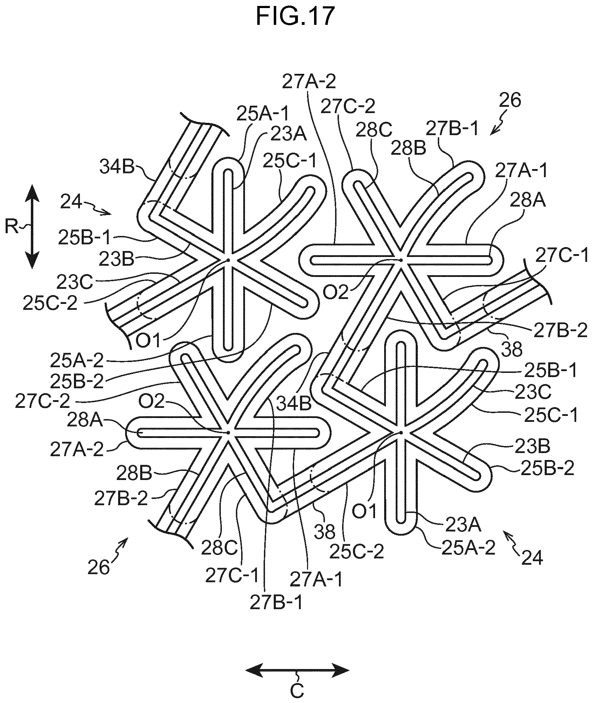

Note that as illustrated in Fig. 16 and Fig. 17, the third extension portion 25C-1 and the second extension portion 27B-1 of the first asterisk projection 24 and the second asterisk projection 26 of the present exemplary embodiment may each be configured with a curving shape. The third extension portion 25C-1 is curved such that its leading end approaches the connecting portion 38, and the second extension portion 27B-1 is curved such that its leading end approaches the connecting portion 34B. By configuring the third extension portion 25C-1 and the second extension portion 27B-1 with curving shapes in this manner, a concentration of reflected light reflected by the third extension portion 25C-1 and the second extension portion 27B-1 is suppressed. This thereby raises the uniformity of the appearance when viewed from different angles, enabling visibility to be enhanced. Moreover, the bottom face of the base 22 becomes difficult to see due to the curved extension portions, enabling reflection of light incident to the pattern region 20-5 to be suppressed.

### Sixth Exemplary Embodiment

Next, explanation follows regarding a sixth exemplary embodiment of the present invention. In the present exemplary embodiment, portions similar to those of the first to the fifth exemplary embodiments are allocated the same reference numerals, and detailed explanation thereof is omitted.

In a tire 10 of the present exemplary embodiment, the pattern region 20 of the first exemplary embodiment is modified to form a pattern region 20-6. The main difference in the pattern region 20-6 is to the connecting portions 34 of the fourth exemplary embodiment.

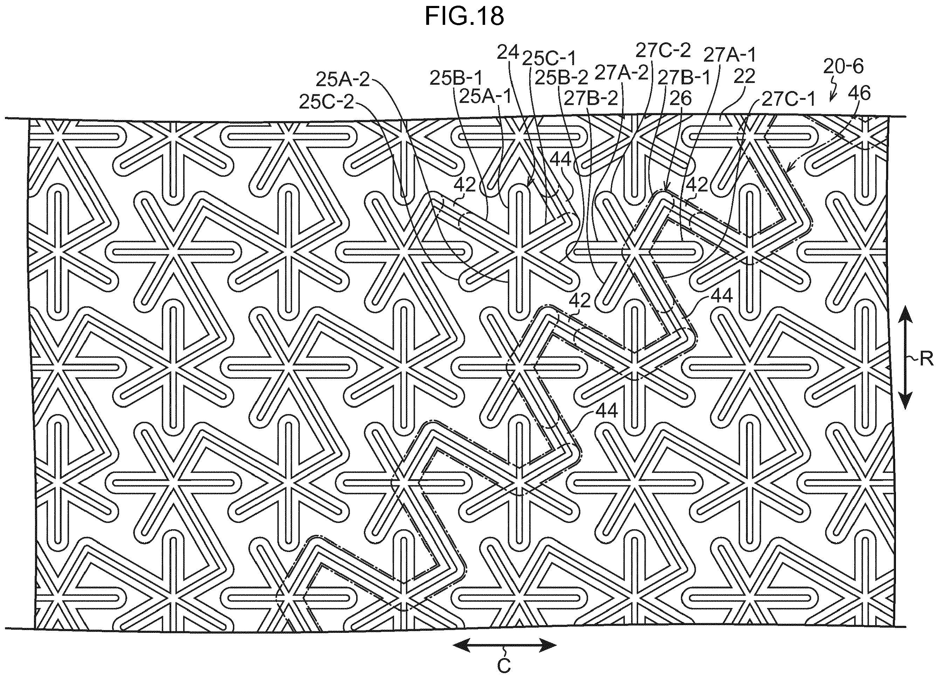

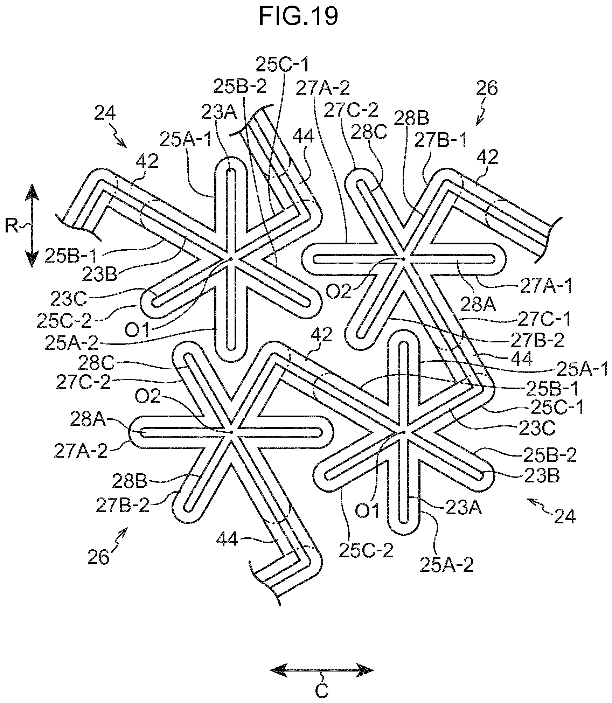

In the present exemplary embodiment, as illustrated in Fig. 18 and Fig. 19, a connecting portion 42 is formed between the second extension portion 25B-1 and the second extension portion 27B-1. The connecting portion 42 extends from the leading end of the second extension portion 25B-1 in the same direction as the second extension portion 25B-1, and is connected to the leading end of the second extension portion 27B-1 adjacent in the tire circumferential direction C so as to form an angle of 90°. The connecting portion 42 has the same cross-section profile as the second extension portion 25B-1. The second extension portion 27B-1 and the second extension portion 25B-1 are continuous in the tire circumferential direction C through the connecting portion 42. The connecting portion 42 is integrally connected to the second extension portion 25B-1 and the second extension portion 27B-1. The second extension portion 25B-1 is lengthened by the connecting portion 42 to form a straight line portion that is longer than the other extension portions.

A connecting portion 44 is formed between the third extension portion 25C-1 and the third extension portion 27C-1. The connecting portion 44 extends from the leading end of the third extension portion 27C-1 in the same direction as the third extension portion 27C-1, and is connected to the leading end of the third extension portion 25C-1 adjacent in the tire radial direction R so as to form an angle of 90°. The connecting portion 44 has the same cross-section profile as the third extension portion 27C-1. The third extension portion 27C-1 and the third extension portion 25C-1 are continuous in the tire radial direction R through the connecting portion 44. The connecting portion 44 is integrally connected to the third extension portion 27C-1 and the third extension portion 25C-1. The third extension portion 27C-1 is lengthened by the connecting portion 44 to form a straight line portion that is longer than the other extension portions.

The second extension portion 25B-1 and the second extension portion 27B-1 are continuous to each other in the tire circumferential direction C through the connecting portion 42. The third extension portion 27C-1 and the third extension portion 25C-1 are continuous to each other in the tire radial direction R through the connecting portion 44. Moreover, the third extension portions 27C-1, the connecting portions 44, the third extension portions 25C-1, the second extension portions 25B-1, the connecting portions 42, and the second extension portions 27B-1 are connected together in this sequence to form a continuous single continuous projection 46. The continuous projection 46 passes through the centers O1, O2 of the first asterisk projections 24 and the second asterisk projections 26, and bends between non-adjacent extension portions at the centers O1, O2 so as to extend toward other first asterisk projections 24 and second asterisk projections 26. Overall, the continuous projection 46 extends at an angle inclined with respect to the tire radial direction R. The continuous projection 46 is formed continuously from an inside end to an outside end of the pattern region 20-6 in the tire radial direction R.

In the pattern region 20-6 of the present exemplary embodiment, adjacent first asterisk projections 24 and second asterisk projections 26 are connected together through the connecting portions 42 and the connecting portions 44 that extend in different directions to each other. This thereby enables light to be reflected in different directions by the connecting portions, thus raising the uniformity of the appearance when viewed from different angles, and thereby enabling visibility to be enhanced. Similar advantageous effects to those of the third exemplary embodiment can also be obtained.

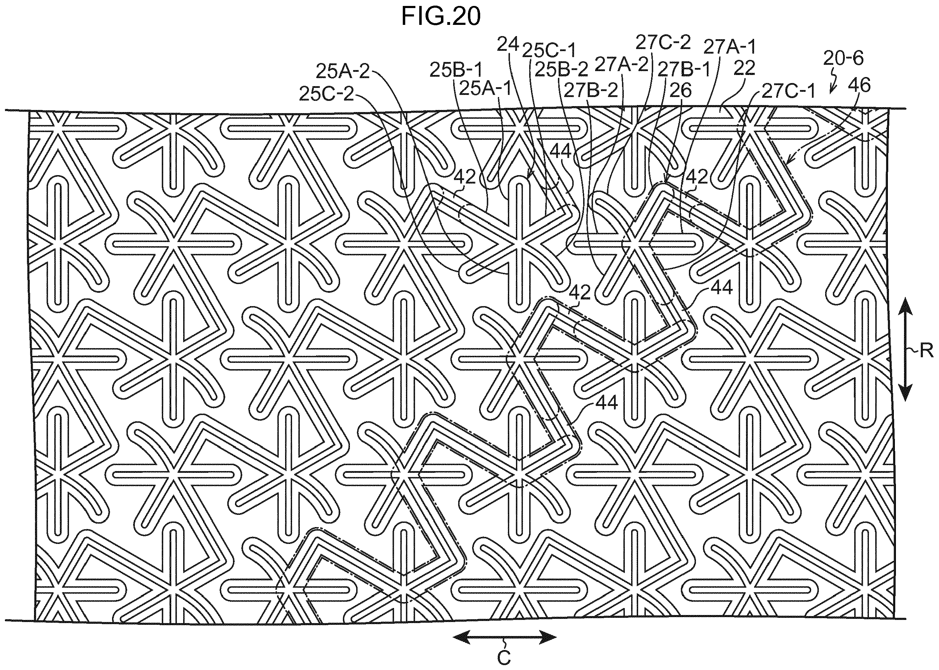

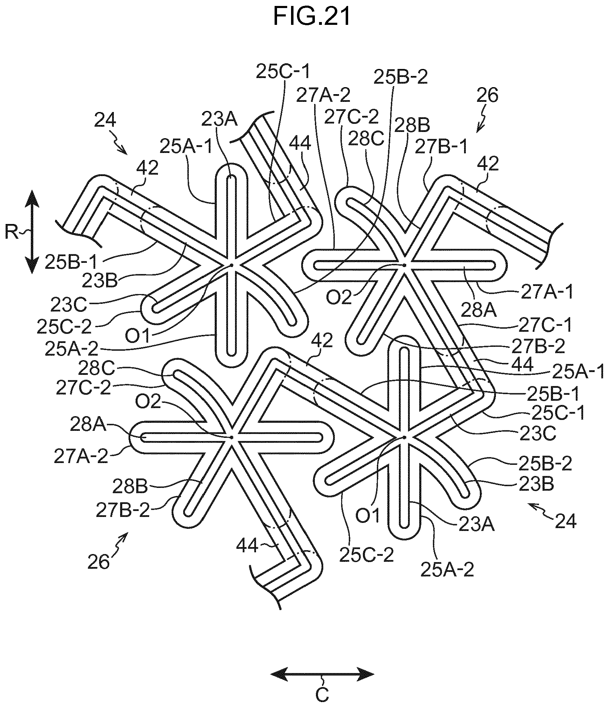

Note that as illustrated in Fig. 20 and Fig. 21, the second extension portion 25B-2 and the third extension portion 27C-2 of the first asterisk projection 24 and the second asterisk projection 26 of the present exemplary embodiment may each be configured with a curving shape. The second extension portion 25B-2 is curved such that its leading end approaches the second extension portion 27B-1, and the third extension portion 27C-2 is curved such that its leading end approaches the third extension portion 25C-1. By configuring the second extension portion 25B-2 and the third extension portion 27C-2 with curving shapes in this manner, a concentration of reflected light reflected by the second extension portion 25B-2 and the third extension portion 27C-2 is suppressed. This thereby raises the uniformity of the appearance when viewed from different angles, enabling visibility to be enhanced. Moreover, the bottom face of the base 22 becomes difficult to see due to the curved extension portions, enabling reflection of light incident to the pattern region 20-6 to be suppressed.

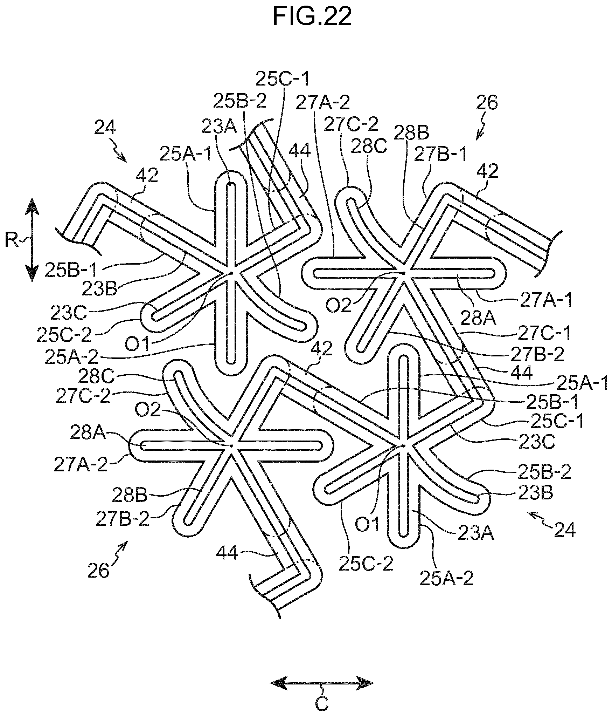

Note that as illustrated in Fig. 22, the directions in which the second extension portion 25B-2 and the third extension portion 27C-2 curve may be the opposite directions to the directions illustrated in Fig. 21.

### Seventh Exemplary Embodiment

Next, explanation follows regarding a sixth exemplary embodiment of the present invention. In the present exemplary embodiment, portions similar to those of the first to the sixth exemplary embodiments are allocated the same reference numerals, and detailed explanation thereof is omitted.

In a tire 10 of the present exemplary embodiment, the pattern region 20 of the first exemplary embodiment is modified to form a pattern region 20-7. The main difference in the pattern region 20-7 lies in the point that the connecting portion 42 of the fifth exemplary embodiment is provided instead of the connecting portion 34A of the fourth exemplary embodiment.

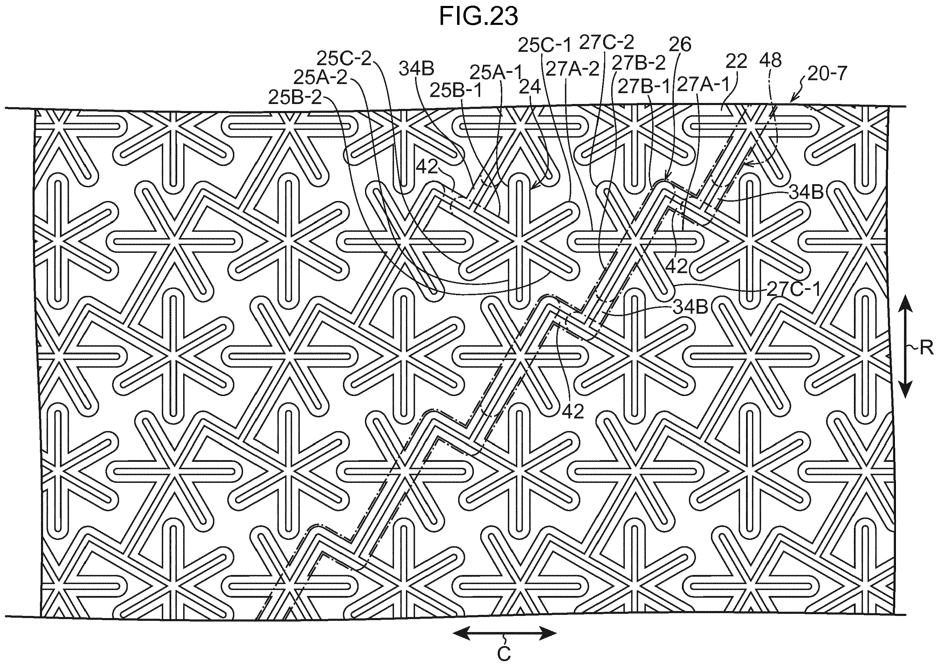

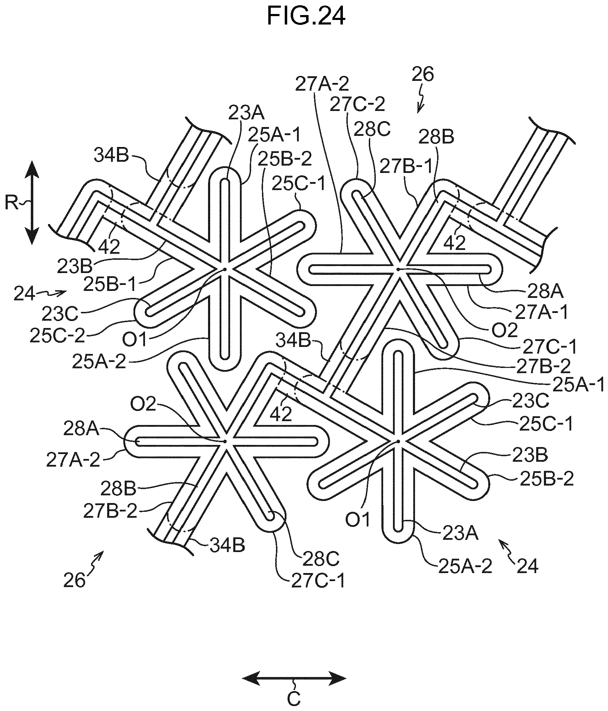

In the present exemplary embodiment, as illustrated in Fig. 23 and Fig. 24, the connecting portion 42 is formed between the second extension portion 25B-1 and the second extension portion 27B-1. The connecting portion 42 extends from the leading end of the second extension portion 25B-1 in the same direction as the second extension portion 25B-1, and is connected to the leading end of the second extension portion 27B-1 adjacent in the tire circumferential direction C so as to form an angle of 90°. The connecting portion 42 is integrally connected to the second extension portion 25B-1 and the second extension portion 27B-1. The second extension portion 25B-1 is lengthened by the connecting portion 42 to form a straight line portion that is longer than the other extension portions.

The connecting portion 34B is formed between the tire radial direction R outside of the second extension portion 25B-1 and the leading end of the second extension portion 27B-2. The connecting portion 34B extends from the leading end of the second extension portion 27B-2 in the same direction as the second extension portion 27B-2, and is connected to the tire radial direction R outside of the second extension portion 25B-1 adjacent in the tire radial direction R so as to form an angle of 90°. The connecting portion 34B is integrally connected to the second extension portion 25B-1 and the second extension portion 27B-2. The second extension portion 27B-2 is lengthened by the connecting portion 34B to form a straight line portion that is longer than the other extension portions.

The second extension portion 25B and the second extension portion 27B are continuous to each other in the tire circumferential direction C and in the tire radial direction R through the connecting portions 34B, 42. Moreover, the second extension portions 27B, the connecting portions 34B, the second extension portions 25B-1, and the connecting portions 42 are connected together in this sequence to form a continuous single continuous projection 48. In other words, the continuous projection 48 passes through the center O2 of the second asterisk projection 26, and adjacent second asterisk projections 26 in a direction inclined with respect to the tire radial direction R are configured together through one end portion of the first asterisk projection 24 and the connecting portions 42, 34B. Overall, the continuous projection 48 extends at an angle inclined with respect to the tire radial direction R. The continuous projection 48 is formed in a continuous zigzagging shape from an inner end to an outer end of the pattern region 20-7 in the tire radial direction R.

In the pattern region 20-7 of the present exemplary embodiment, adjacent first asterisk projections 24 and second asterisk projections 26 are connected together by the connecting portion 34B and the connecting portion 42 that extend in different directions to each other, thereby enabling the direction of light reflected by the connecting portions to be varied. This thereby raises the uniformity of the appearance when viewed from different angles, enabling visibility to be enhanced. Similar advantageous effects to those of the fourth exemplary embodiment can also be obtained.

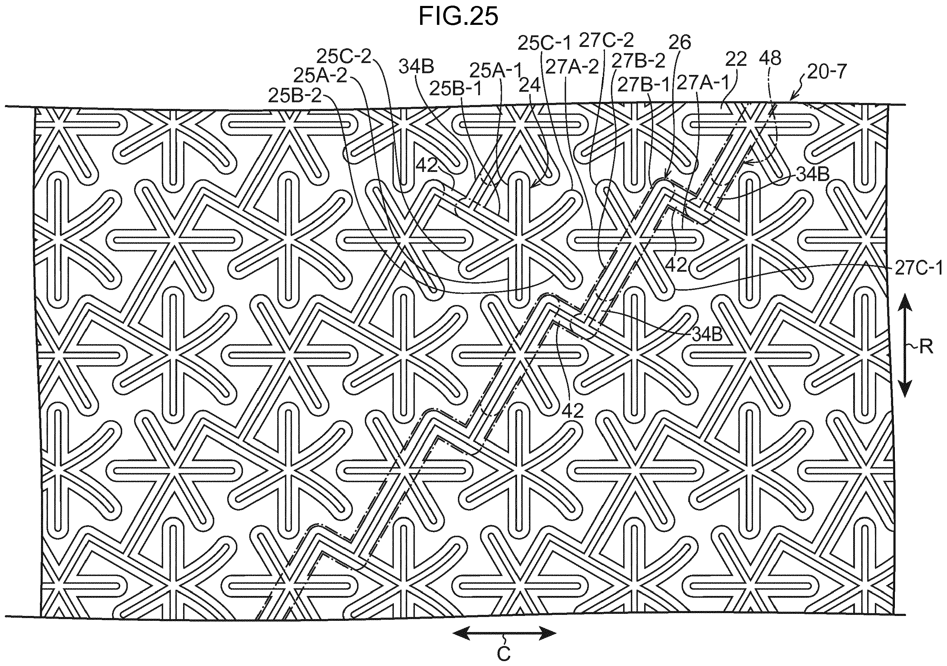

Note that as illustrated in Fig. 25, the second extension portion 25B-2 and the third extension portion 25C-1 of the first asterisk projection 24 of the present exemplary embodiment may each be configured with a curving shape. The second extension portion 25B-2 is curved such that its leading end approaches the connecting portion 42, and the third extension portion 25C-1 is curved such that its leading end approaches the leading end of the third extension portion 27C-1. By configuring the second extension portion 25B-2 and the third extension portion 25C-1 with curving shapes in this manner, a concentration of reflected light reflected by the second extension portion 25B-2 and the third extension portion 25C-1 is suppressed. This thereby raises the uniformity of the appearance when viewed from different angles, enabling visibility to be enhanced. Moreover, the bottom face of the base 22 becomes difficult to see due to the curved extension portions, enabling reflection of light incident to the pattern region 20-7 to be suppressed.

### Eighth Exemplary Embodiment

Next, explanation follows regarding a seventh exemplary embodiment of the present invention. In the present exemplary embodiment, portions similar to those of the first to the seventh exemplary embodiments are allocated the same reference numerals, and detailed explanation thereof is omitted.

In a tire 10 of the present exemplary embodiment, the pattern region 20 of the first exemplary embodiment is modified to form a pattern region 20-8. The main difference in the pattern region 20-8 lies in the point that connecting portions 52, 54 are formed instead of the connecting portion 34 of the fourth exemplary embodiment.

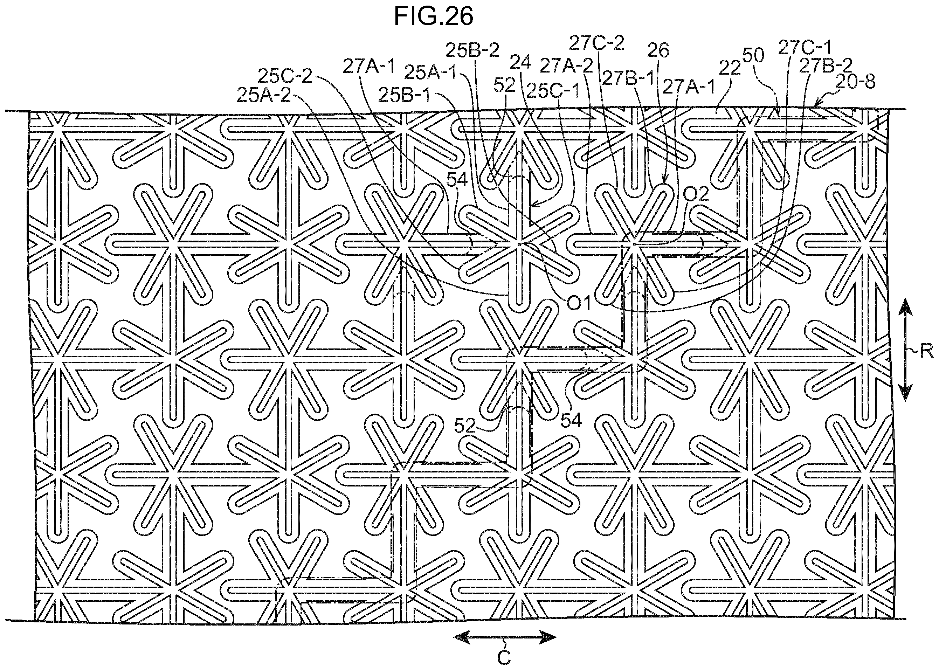

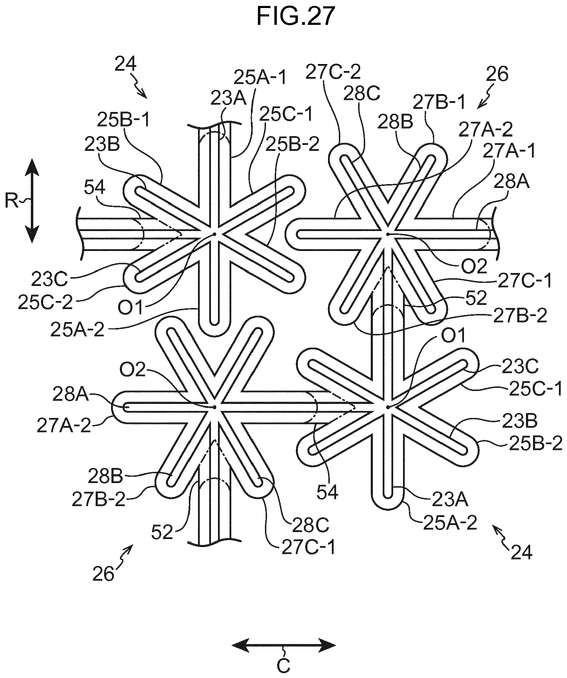

As illustrated in Fig. 26 and Fig. 27, the pattern region 20-8 of the present exemplary embodiment includes the connecting portion 52 formed between the leading end of the first extension portion 25A-1 and the center O2 of the second asterisk projection 26, and the connecting portion 54 formed between the leading end of the first extension portion 27A-1 and the center O1 of the first asterisk projection 24.

The connecting portion 52 extends from a leading side of the first extension portion 25A-1 toward the center O2 of the second asterisk projection 26, and is connected between the second extension portion 27B-2 and the third extension portion 27C-1. The cross-section profile of the connecting portion 52 is similar to that of the first extension portion 25A-1. The connecting portion 52 is integrally connected to the first extension portion 25A-1, the second extension portion 27B-2, and the third extension portion 27C-1. The first extension portion 25A-1 is lengthened by the connecting portion 52 to form a straight line portion that is longer than the other extension portions. The first extension portion 25A-1 and the second asterisk projection 26 are continuous to each other in the tire radial direction R through the connecting portion 52.

The connecting portion 54 extends from the leading end of the first extension portion 27A-1 toward the center O1 of the first asterisk projection 24, and is connected between the second extension portion 25B-1 and the third extension portion 25C-2. The cross-section profile of the connecting portion 54 is similar to that of the first extension portion 27A-1. The connecting portion 54 is integrally connected to the first extension portion 27A-1, the second extension portion 25B-1, and the third extension portion 25C-2. The first extension portion 27A-1 is lengthened by the connecting portion 54 to form a straight line portion that is longer than the other extension portions. The first extension portion 27A-1 and the first asterisk projection 24 are continuous to each other in the tire circumferential direction C through the connecting portion 54.

In the first asterisk projections 24 and the second asterisk projections 26, the first extension portions 27A-1, the connecting portions 52, the first extension portions 25A-1, and the connecting portions 54 are connected together in this sequence to form a continuous single continuous projection 50. The continuous projection 50 passes through the centers O1, O2 of the first asterisk projections 24 and the second asterisk projections 26 and extends around 90° bends at the centers O1, O2 so as to connect to the adjacent first asterisk projection 24 or second asterisk projection 26. Overall, the continuous projection 50 extends in a zigzagging shape at an angle inclined with respect to the tire radial direction R. The continuous projection 50 is formed continuously from an inside end to an outside end of the pattern region 20-8 in the tire radial direction R.

In the pattern region 20-8 of the present exemplary embodiment, adjacent first asterisk projections 24 and second asterisk projections 26 are connected together by the connecting portions 52 and the connecting portions 54 that extend in different directions to each other, thereby enabling the direction of light reflected by the connecting portions to be varied. This thereby raises the uniformity of the appearance when viewed from different angles, enabling visibility to be enhanced. Similar advantageous effects to those of the fourth exemplary embodiment can also be obtained.

### Ninth Exemplary Embodiment

Next, explanation follows regarding a ninth exemplary embodiment of the present invention. In the present exemplary embodiment, portions similar to those of the first to the eighth exemplary embodiments are allocated the same reference numerals, and detailed explanation thereof is omitted.

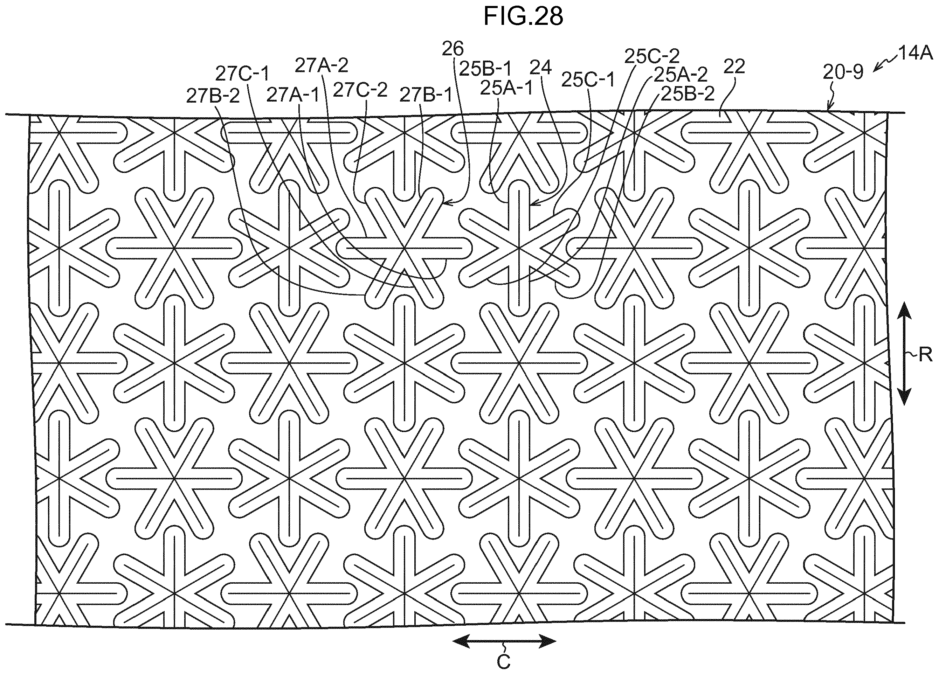

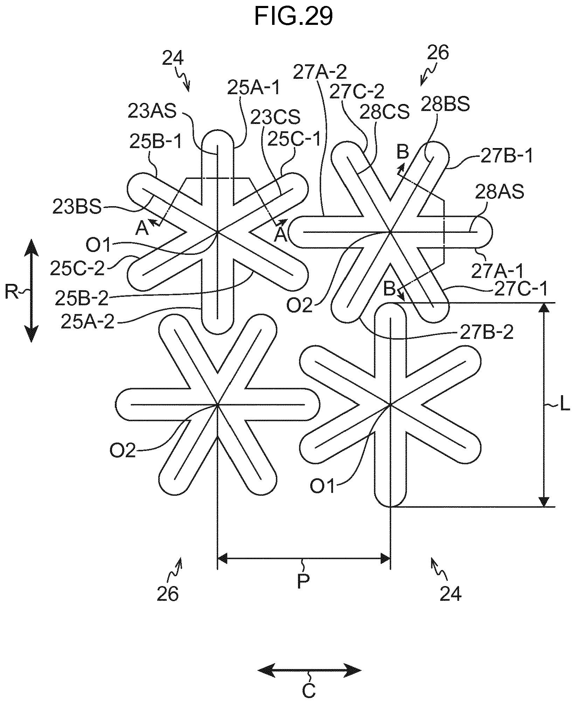

In a tire 10 of the present exemplary embodiment, the pattern region 20 of the first exemplary embodiment is modified to form a pattern region 20-9. As illustrated in Fig. 28 and Fig. 29, the pattern region 20-9 includes first asterisk projections 24 and second asterisk projections 26 similar in configuration and similar in placement to those of the first exemplary embodiment in plan view. In the present exemplary embodiment, the cross-sections of the first asterisk projection 24 and the second asterisk projection 26 differ to those of the first exemplary embodiment.

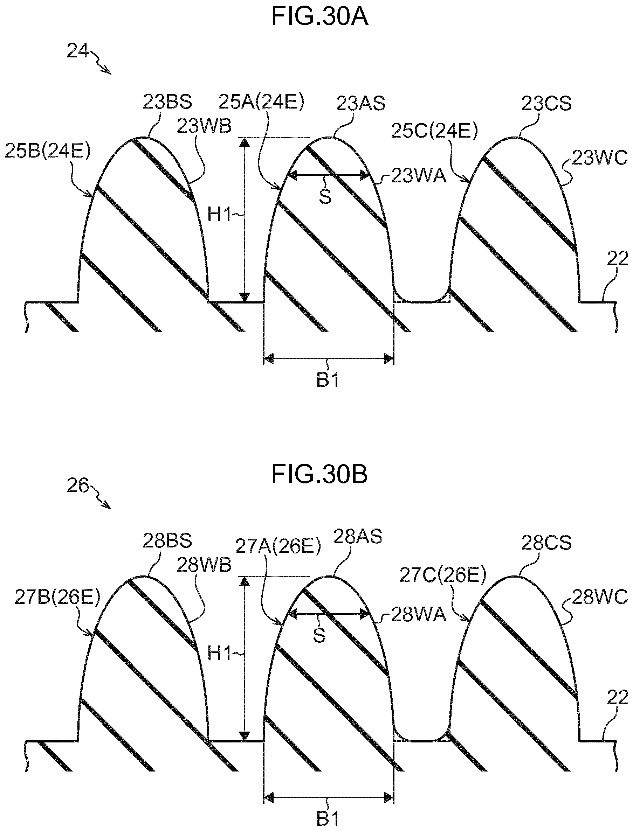

As illustrated in Fig. 30A and Fig. 30B, in the first asterisk projection 24, each of the extension portions 24E is configured with a semi-elliptical cross-section as sectioned in a direction orthogonal to the extension direction of the extension portion 24E. A radius of curvature of each cross-section becomes greater on progression from the apex toward the base 22. In the following explanation, the apexes of the first extension portions 25A are referred to as first apexes 23AS, the apexes of the second extension portions 25B are referred to as second apexes 23BS, and the apexes of the third extension portion 25C are referred to as third apexes 23CS. The first apexes 23AS to the third apexes 23CS are curved so as to be convex at projection leading end sides of the first extension portion 25A to the third extension portion 25C (toward the upper side in the drawings). The height from the base 22 to the respective tips of the first apexes 23AS, the second apexes 23BS, and the third apexes 23CS (referred to below as the "projection height H1") is set from 0.1 mm to 1.0 mm. In the following explanation, the first apexes 23AS, the second apexes 23BS, and the third apexes 23CS are referred to collectively as the first apexes 23AS to the third apexes 23CS. Note that the projection height H1 is more preferably set in a range from 0.2 mm to 0.8 mm.

As illustrated in Fig. 30A, in the first asterisk projection 24, the base 22 has a flat profile between the first extension portions 25A and the second extension portions 25B, and the base 22 has a curved face profile between the first extension portions 25A and the third extension portion 25C. Moreover, as illustrated in Fig. 30B, in the second asterisk projection 26, described later, the base 22 has a flat profile between first extension portions 27A and second extension portions 27B, and the base 22 has a curved face profile between the first extension portions 27A and third extension portions 27C. Configuring the base 22 with a curved face profile suppresses reflection of incident light, thus increasing the contrast with the exterior of the pattern region 20-9, and enhancing visibility.

In the extension portions 24E, the projection height H1 is preferably 0.8 to 6 times a minor axis length B1 of the semi-elliptical profile (the distance between bases of the side wall faces at the base 22). If the projection height H1 is less than 0.8 times the minor axis length B1, light reflected at the first side wall face 23WA to the third side wall face 23WC returns to the outside from between the extension portions 24E, detracting from the enhancement in visibility. Namely, light is reflected, reducing the difference in contrast with the exterior of the pattern region 20-9, and thus detracting from the enhancement in visibility. On the other hand, if the projection height H1 is greater than 6 times the minor axis length B1, the first side wall face 23WA to the third side wall face 23WC form an angle that is almost perpendicular to the base 22, making the extension portions 24E liable to tilt over. Accordingly, in consideration of the effect of suppressing reflected light of the light incident between the extension portions 24E from returning to the outside from between the extension portions 24E, and also in consideration of the durability of the extension portions 24E, the projection height H1 is preferably from 0.8 times to 6 times the minor axis length B1.

The second asterisk projections 26 have the same shape as the first asterisk projections 24, and in plan view, the second asterisk projections 26 are arranged rotated 90° about the center O1 with respect to the orientation of the first asterisk projections 24. In each second asterisk projection 26, portions respectively corresponding to the first extension portions 25A-1, 25A-2, the second extension portions 25B-1, 25B-2, the third extension portions 25C-1, 25C-2, and the center O1 of the first asterisk projection 24 are referred to as first extension portions 27A-1, 27A-2, second extension portions 27B-1, 27B-2, third extension portions 27C-1, 27C-2, and the center O2. In the following explanation, the six extension portions above are referred to collectively as the "extension portions 26E". Moreover, portions corresponding to the first apexes 23AS, the second apexes 23BS, and the third apexes 23CS are referred to as first apexes 28AS, second apexes 28BS, and third apexes 28CS. In the following explanation, the first apexes 28AS, the second apexes 28BS, and the third apexes 28CS are referred to collectively as the first apexes 28AS to the third apexes 28CS. Moreover, portions corresponding to the first side wall faces 23WA, the second side wall faces 23WB, and the third side wall faces 23WC are referred to as first side wall faces 28WA, second side wall faces 28WB, and third side wall faces 28WC. In the following explanation, the first side wall faces 23WA, the second side wall faces 23WB, and the third side wall faces 23WC are referred to collectively as the first side wall faces 23WA to the third side wall faces 23WC, and the first side wall faces 28WA, the second side wall faces 28WB, and the third side wall faces 28WC are referred to collectively as the first side wall faces 28WA to the third side wall faces 28WC. Due to arranging the second asterisk projections 26 as described above, the respective extension portions 24E and the respective extension portions 26E extend in different directions to each other.

In the pattern region 20-9 of the present exemplary embodiment, the apexes (the first apexes 23AS to the third apexes 23CS, the first apexes 28AS to the third apexes 28CS) of the extension portions 24E of the first asterisk projection 24 and the extension portions 26E of the second asterisk projection 26 are curved so as to be convex at the projection leading end sides of the extension portions (toward the upper side in the drawing). Accordingly, the directions of reflected light can be dispersed to a greater extent than in cases in which the apexes have flat faces, such that the reflection directions in which light is reflected by the pattern region 20-9 are varied, thereby suppressing a concentration of reflected light. This thereby raises the uniformity of the appearance of the patterned section when viewed from different angles, enabling visibility to be enhanced.

Moreover, in the extension portions 24E and the extension portions 26E, when the first to third side wall faces 23WA to 23WC, 28WA to 28WC are viewed in cross-section taken orthogonally to their respective extension directions, the distance S between the side wall faces on either side increases on progression from the apex side toward the base 22. Accordingly, the spacing between the adjacent first apexes 23AS to the third apexes 23CS, and the first apexes 28AS to the third apexes 28CS, is wider than a spacing on the base 22 side, allowing light to be incident between the extension portions 24E and between the extension portions 26E over a wide range. The light that is incident between the extension portions 24E and between the extension portions 26E is reflected back and forth between the side wall faces, enabling reflected light to be suppressed from returning from between the extension portions to the outside.

Moreover, by configuring the cross-sections of the extension portions 24E and the extension portions 26E as sectioned in a direction orthogonal to their respective extension directions in the manner described above, removal from the mold is facilitated during manufacture, enabling molding characteristics to be enhanced. As a result, there is little inward tilting of the first asterisk projections 24 and the second asterisk projections 26, enabling durability to be enhanced.

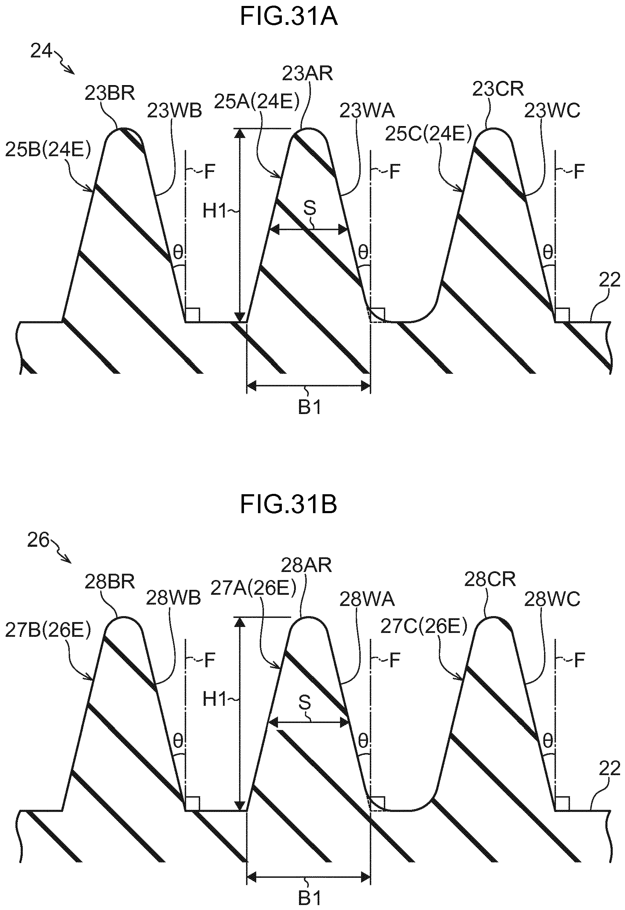

Note that in the present exemplary embodiment, the cross-sections of the extension portions 24E and the extension portions 26E as sectioned in a direction orthogonal to their respective extension directions are configured as semi-elliptical profiles. However, configuration may be made with other shapes. As illustrated in Fig. 31A and Fig. 31B, for example, the isosceles triangle shaped first apexes 23AS to the third apexes 23CS and the first apexes 28AS to the third apexes 28CS may have curved face profiles to configure first apexes 23AR to third apexes 23CR, and first apexes 28AR to third apexes 28AR.

The first side wall face 23WA, the second side wall face 23WB, and the third side wall face 23WC that configure inclined edges of the isosceles triangles of the extension portions 24E and the extension portions 26E illustrated in Fig. 31A and Fig. 31B each form an angle θ with respect to a hypothetical perpendicular plane F running perpendicular to the base 22. The angle θ is preferably set within a range from 5° to 30°, and the angle θ is more preferably set within a range from 15° to 25°. If the angle θ is an angle larger than 30°, light reflected by the first side wall face 23WA to the third side wall face 23WC returns to the outside from between the extension portions 24E and the extension portions 26E, detracting from the enhancement in visibility. Namely, light is reflected, reducing the difference in contrast with the exterior of the pattern region 20-9, and thus detracting from the enhancement in visibility. On the other hand, if the angle θ is smaller than 5°, the extension portions 24E and the extension portions 26E become liable to tilt over. Accordingly, in consideration of the effect of suppressing light incident between the extension portions 24E and the extension portions 26E from reflecting and returning to the outside from between the extension portions 24E and the extension portions 26E, and also in consideration of the durability of the extension portions 24E and the extension portions 26E, the angle θ is preferably set to from 5° to 30°.

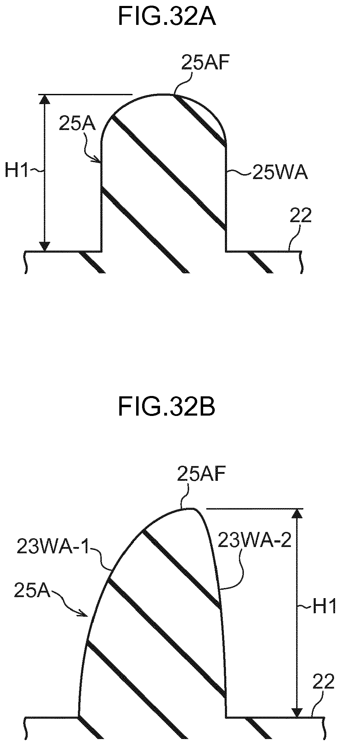

Moreover, as illustrated in Fig. 32A, the extension portions 24E and the extension portions 26E may be configured with a profile formed by first side wall faces 25WA running perpendicular to the base 22, and a curved face 25AF at the apex. Providing the perpendicular first side wall faces 25WA makes the extension portions less liable to tilt over, enhancing durability. Moreover, as illustrated in Fig. 32B, out of opposing first side wall faces 23WA, the degree of flatness of one first side wall face 23WA-1 may be different to the degree of flatness of another first side wall face 23WA-2. Configuring the side wall face with different degrees of flatness suppresses concentration of reflected light. This thereby raises the uniformity of the appearance of the patterned section when viewed from different angles, enabling visibility to be enhanced. Note that Fig. 32A and Fig. 32B only illustrate the first extension portion 25A.

Moreover, the cross-sections of the first asterisk projection 24 and the second asterisk projection 26 of the present exemplary embodiment may be applied to a first asterisk projection 24 and a second asterisk projection 26 having similar configuration and similar placement to those of the second to the seventh exemplary embodiments.

### Tenth Exemplary Embodiment

Next, explanation follows regarding a tenth exemplary embodiment of the present invention. In the present exemplary embodiment, portions similar to those of the first to the ninth exemplary embodiments are allocated the same reference numerals, and detailed explanation thereof is omitted.

A tire 10 of the present exemplary embodiment differs from those of the first to the ninth exemplary embodiments in the point that the pattern region 20 is formed to a tread 30. A pattern region 20 may be applied with the configuration of any one of the first to the ninth exemplary embodiment.

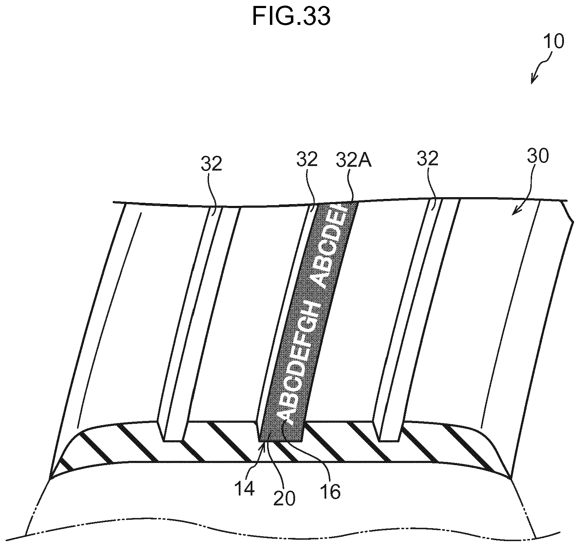

As illustrated in Fig. 33, the tire 10 is provided with the tread 30 at a tire radial direction outside. The tread 30 is formed with plural circumferential direction grooves 32. A groove bottom 32A of one circumferential direction groove 32 is formed with a design 14 provided with the text region 16 and the pattern region 20. The pattern region 20 may be formed with a configuration similar to that of any of the first to the ninth exemplary embodiments.

The present exemplary embodiment enables the contrast between the text region 16 and the pattern region 20 of the design 14 formed to the groove bottom 32A of the tread 30 to be increased, enabling visibility to be enhanced in the tread 30.

Note that the tires 10 of the first to the tenth exemplary embodiments may be pneumatic tires, or may be non-pneumatic tires.

### Testing Examples

In order to demonstrate the advantageous effects of the present invention, the following tires were prepared: (1) tires of Examples 1 to 7 applied with the present invention, and tires of Comparative Example 1 to Comparative Example 4; (2) tires of Examples 3-1 to 3-7 applied with the present invention, and tires of Comparative Example 3-1 to Comparative Example 3-5; (3) tires of Examples 8-1 to 8-7 applied with the present invention, and tires of Comparative Example 8-1 to Comparative Example 8-5. The following Tests 1 to 3 were conducted.

A tire having a size of 205/55R16 and a tire cross-section height SH of 114 mm was employed for each test tire.

### Test 1

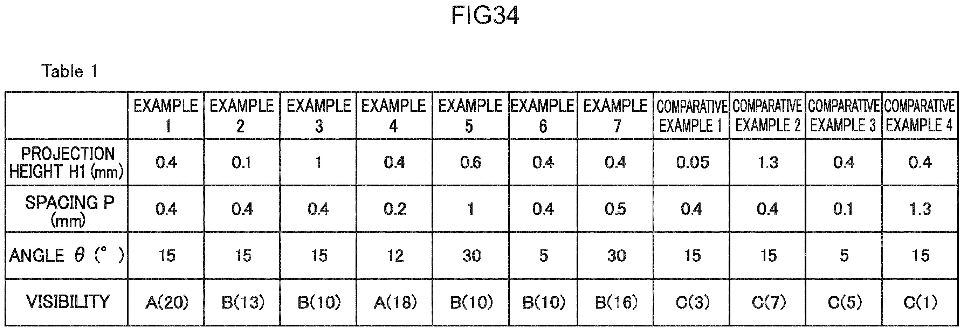

The tires of Examples 1 to 7 and Comparative Examples 1 to 4 are tires having a similar structure to the tire according to the first exemplary embodiment of the present invention. The spacing P, the projection height HI, and the angle θ of the first asterisk projections 24 and the second asterisk projections 26 formed in the pattern region 20 of the design 14A are each varied as illustrated in Table 1 in Fig. 34.

In Test 1, visibility of the pattern region when viewed from different directions was evaluated.

First, each test tire was fitted to an applicable rim, after which 20 participants observed the test tires and completed a survey on whether the pattern region appears a deeper black than in a normal tire. The results thereof are illustrated under "visibility" in Table 1. Note that in Table 1, evaluation is ranked A if the number of participants who responded that the pattern region appears more black than in a normal tire is 18 or greater, B if the number of participants is from 10 to 17, and C if the number of participants is 9 or fewer. Note that in Table 1, the number of participants who responded that the pattern region appears black is also given.

From Table 1, it can be seen that visibility is enhanced in the tires of Examples 1 to 7 applied with the present invention in comparison to the tires of Comparative Examples 1 to 4.

### Test 2

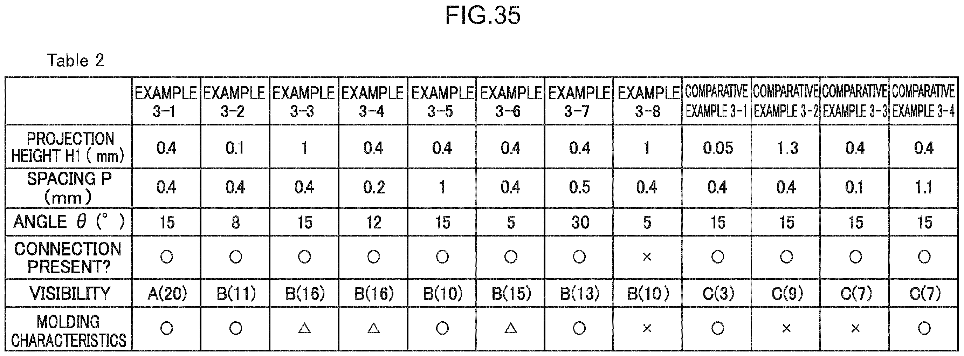

The tires of Examples 3-1 to 3-8 and the tires of Comparative Examples 3-1 to 3-4 are tires having a similar structure to the tire according to the fourth exemplary embodiment of the present invention. The spacing P, the projection height HI, and the angle θ of the first asterisk projections 24 and the second asterisk projections 26 formed in the pattern region 20-4 of the design 14A are each varied as illustrated in Table 2 in Fig. 35.

The tire of Example 3-8, has a further difference in that the first asterisk projection 24 and the second asterisk projection 26 formed in the pattern region 20-4 are not connected together by the connecting portion 34 (the connecting portion 34 is not formed).

In Test 2, first, visibility of the pattern region when viewed from different directions was evaluated. The evaluation method for visibility was similar to that of Test 1.

Next, in Test 2, the molding characteristics of the projections configuring the patterned section were evaluated.

Table 2 uses a circle in cases in which the prevalence of inward tilting of the first asterisk projection 24 and the second asterisk projection 26 after manufacture was below 0.1%, a triangle in cases in which the prevalence of inward tilting was no less than 0.1% and below 0.3%, and an × in cases in which the prevalence of inward tilting was 0.3% or greater.

As illustrated in Table 2, it can be seen that the tires of Examples 3-1 to 3-8 applied with the present invention exhibit both enhanced visibility and enhanced molding characteristics in comparison to the tires of Comparative Examples 3-1 to 3-4.

### Test 3

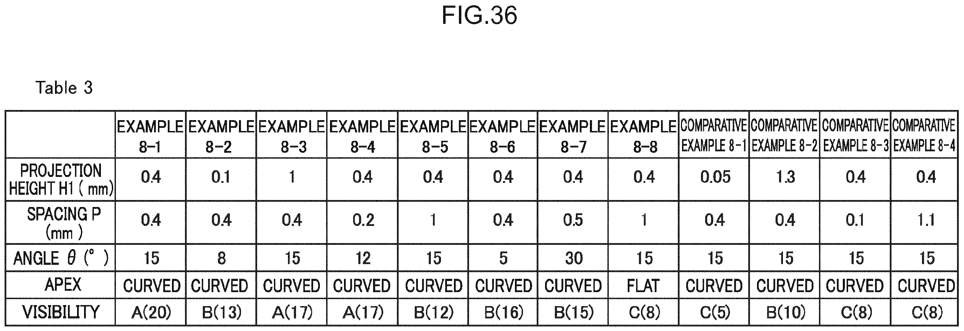

The tires of Examples 8-1 to 8-8 and the tires of Comparative Examples 8-1 to 8-4 are tires having a similar structure to the tire according to the ninth exemplary embodiment of the present invention. The spacing P, the projection height HI, and the angle θ of the first asterisk projections 24 and the second asterisk projections 26 formed in the pattern region 20-9 of the design 14A are each varied as illustrated in Table 3 in Fig. 36.

The tire of Example 8-8 has a further difference from Examples 8-1 to 8-7 and the Comparative Examples 8-1 to 8-4 that have curved projection leading end sides in the point that the projection leading end sides of each of the extension portions of the first asterisk projection 24 and the second asterisk projection 26 formed in the pattern region 20-9 have a flattened profile.

In this Test, visibility of the pattern region when viewed from different directions was evaluated. The evaluation method for visibility was similar to that of Test 1.

As illustrated in Table 3, it can be seen that the tires of Examples 8-1 to 8-8 applied with the present invention exhibited enhanced visibility in comparison to the tires of Comparative Examples 8-1 to 8-4.

### Test 4

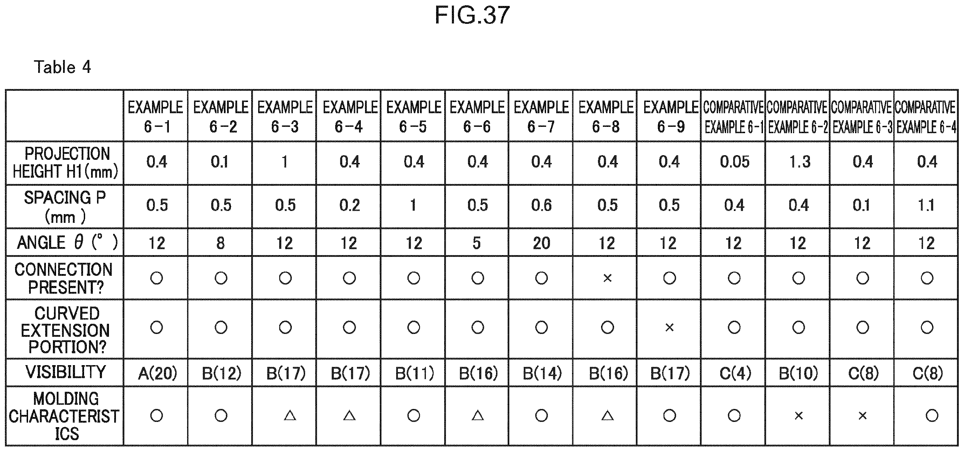

The tires of Examples 6-1 to 6-9 and the tires of Comparative Examples 6-1 to 6-4 are tires having a similar structure to the tire of the modified example of the sixth exemplary embodiment of the present invention that includes the pattern region 20-6 of the design 14A illustrated in Fig. 20 and Fig. 21. The spacing P, the projection height H1, and the angle θ of the first asterisk projections 24 and the second asterisk projections 26 formed in the pattern region 20-6 of the design 14A are each varied as illustrated in Table 4 in Fig. 37.

Moreover, Example 6-9 differs from the other Examples and Comparative Examples in Table 4 in the point that it does not include curved extension portions, and the second extension portion 25B-2 and the third extension portion 27C-2 extend in straight line shapes.

In this Test, visibility of the pattern region when viewed from different directions was evaluated. The evaluation method for visibility was similar to that of Test 1.

As illustrated in Table 4, it can be seen that the tires of Examples 6-1 to 6-9 applied with the present invention exhibited enhanced visibility in comparison to the tires of Comparative Examples 6-1 to 6-4. Moreover, the tires of Example 6-1 and Example 6-9 differ only in the condition of the presence or absence of curved extension portions. It can therefore be seen that having a curved extension portions enhances visibility.

## Claims

1. A tire (10), comprising:
a pattern region (20) that is formed at an outer surface of a tire (10) and that includes a base (22); and **characterized in that** the tire (10) further comprises:
a plurality of unit patterns (24, 26) that are formed within the pattern region (20), each of the unit patterns (24, 26) including a nodal point (O1, O2) and extension portions (24E, 26E) having a projection height (H1) from the base (22) of from 0.1 mm to 1.0 mm, the extension portions (24E, 26E) extending in a plurality of directions from the nodal point (O1, O2), in plan view,
wherein a spacing (P) between nodal points (O1, O2) of adjacent unit patterns (24, 26) among the plurality of unit patterns (24, 26) is from 0.2 mm to 1.0 mm,
wherein each of the unit patterns (24, 26) have an asterisk shape having extension portions (24E, 26E) that extend radially from the nodal point (O1, O2), and
wherein three or more of the extension portions (24E, 26E) are present in each of the unit patterns (24, 26), and respective angles formed between the adjacent extension portions (24E, 26E) are the same.

2. The tire (10) of claim 1, wherein for the adjacent unit patterns (24, 26), in plan view, at least one of the extension portions (24E, 26E) of one of the unit patterns (24, 26) extends in a different direction to all of the extension portions (24E, 26E) of another of the unit patterns (24, 26).

3. The tire (10) of claim 1 or claim 2, wherein, in plan view, a maximum length (L) of each of the unit patterns (24, 26) is larger than the spacing (P) between the nodal points of the adjacent unit patterns (24, 26).

4. The tire (10) of any one of claim 1 to claim 3, wherein one of the unit patterns (24, 26) and an adjacent unit pattern (24, 26), of the plurality of unit patterns (24, 26), are connected together by a connecting portion (34, 38, 42, 44, 52, 54).

5. The tire (10) of claim 4, wherein the connecting portion (34, 38, 42, 44, 52, 54) connects together the plurality of unit patterns (24, 26) such that the plurality of the unit patterns (24, 26) are continuous with each other from one end to another end of the pattern region (20).

6. The tire (10) of claim 4 or claim 5, wherein all of the unit patterns (24, 26) within the pattern region (20) are in communication with an end portion of the pattern region (20).

7. The tire (10) of claim 5 or claim 6, wherein a continuous zigzag (36, 48, 50) is formed by the extension portions (24E, 26E) of the connected unit patterns (24, 26).

8. The tire (10) of any one of claim 1 to claim 7, wherein the extension portions (24E, 26E) each include an apex (23AS, 23BS, 23CS, 28AS, 28BS, 28CS) that is convexly curved at a projection leading end side of the extension portions (24E, 26E).

9. The tire (10) of any one of claim 1 to claim 8, wherein at least one of the extension portions (24E, 26E) of the unit patterns (24, 26) has a curved shape.

10. The tire (10) of claim 9, wherein the at least one of the extension portions (24E, 26E) having a curved shape curves such that a leading end of the at least one of the extension portions (24E, 26E) approaches one of the extension portions (24E, 26E) of another of the unit patterns (24, 26).

11. The tire (10) of any one of claim 1 to claim 8, wherein the pattern region (20) is formed at a tire side portion (12).

12. The tire (10) of any one of claim 1 to claim 8, wherein the pattern region (20) is formed in a groove (32) of a tread (30).

## Patentansprüche

1. Reifen (10), der Folgendes umfasst:
einen Profilbereich (20), der an einer Außenfläche eines Reifens (10) geformt ist und der eine Basis (22) einschließt, und **dadurch gekennzeichnet, dass** der Reifen (10) ferner Folgendes umfasst:
mehrere Profileinheiten (24, 26), die innerhalb des Profilbereichs (20) geformt sind, wobei jede der Profileinheiten (24, 26) einen Knotenpunkt (O1, O2) und Erweiterungsabschnitte (24E, 26E) einschließt, die eine Vorsprungshöhe (H1) von der Basis (22) von 0,1 mm bis 1,0 mm aufweisen, wobei sich die Erweiterungsabschnitte (24E, 26E), in der Draufsicht, in mehreren Richtungen von dem Knotenpunkt (O1, O2) aus erstrecken,
wobei ein Abstand (P) zwischen Knotenpunkten (O1, O2) benachbarter Profileinheiten (24, 26) unter den mehreren Profileinheiten (24, 26) von 0,2 mm bis 1,0 mm beträgt,
wobei jede der Profileinheiten (24, 26) eine Sternform aufweist, die Erweiterungsabschnitte (24E, 26E) aufweist, die sich in Radialrichtung von dem Knotenpunkt (O1, O2) aus erstrecken, und
wobei drei oder mehr der Erweiterungsabschnitte (24E, 26E) in jeder der Profileinheiten (24, 26) vorhanden sind und die jeweiligen Winkel, die zwischen den benachbarten Erweiterungsabschnitten (24E, 26E) gebildet werden, gleich sind.

2. Reifen (10) nach Anspruch 1, wobei sich für die benachbarten Profileinheiten (24, 26), in der Draufsicht, wenigstens einer der Erweiterungsabschnitte (24E, 26E) einer der Profileinheiten (24, 26) in einer Richtung erstreckt, die sich von allen der Erweiterungsabschnitte (24E, 26E) einer anderen der Profileinheiten (24, 26) unterscheidet.

3. Reifen (10) nach Anspruch 1 oder Anspruch 2, wobei, in der Draufsicht, eine maximale Länge (L) jeder der Profileinheiten (24, 26) größer ist als der Abstand (P) zwischen den Knotenpunkten der benachbarten Profileinheiten (24, 26).

4. Reifen (10) nach einem der Ansprüche 1 bis 3, wobei eine der Profileinheiten (24, 26) und eine benachbarte Profileinheit (24, 26) der mehreren Profileinheiten (24, 26) durch einen Verbindungsabschnitt (34, 38, 42, 44, 52, 54) miteinander verbunden sind.

5. Reifen (10) nach Anspruch 4, wobei der Verbindungsabschnitt (34, 38, 42, 44, 52, 54) die mehreren Profileinheiten (24, 26) derart miteinander verbindet, dass die mehreren Profileinheiten (24, 26) von einem Ende zu einem anderen Ende des Profilbereichs (20) durchgehend miteinander sind.

6. Reifen (10) nach Anspruch 4 oder Anspruch 5, wobei alle der Profileinheiten (24, 26) innerhalb des Profilbereichs (20) mit einem Endabschnitt des Profilbereichs (20) in Verbindung stehen.

7. Reifen (10) nach Anspruch 5 oder Anspruch 6, wobei ein durchgehendes Zickzack (36, 48, 50) durch die Erweiterungsabschnitte (24E, 26E) der verbundenen Profileinheiten (24, 26) gebildet wird.

8. Reifen (10) nach einem der Ansprüche 1 bis 7, wobei die Erweiterungsabschnitte (24E, 26E) jeweils einen Scheitel (23AS, 23BS, 23CS, 28AS, 28BS, 28CS) einschließen, der an einer Vorsprungsvorderendseite der Erweiterungsabschnitte (24E, 26E) konvex gekrümmt ist.

9. Reifen (10) nach einem der Ansprüche 1 bis 8, wobei wenigstens einer der Erweiterungsabschnitte (24E, 26E) der Profileinheiten (24, 26) eine gekrümmte Form aufweist.

10. Reifen (10) nach Anspruch 9, wobei sich der wenigstens eine der Erweiterungsabschnitte (24E, 26E), der eine gekrümmte Form aufweist, derart krümmt, dass sich ein vorderes Ende des wenigstens einen der Erweiterungsabschnitte (24E, 26E) einem der Erweiterungsabschnitte (24E, 26E) einer anderen der Profileinheiten (24, 26) annähert.

11. Reifen (10) nach einem der Ansprüche 1 bis 8, wobei der Profilbereich (20) an einem Reifenseitenabschnitt (12) geformt ist.

12. Reifen (10) nach einem der Ansprüche 1 bis 8, wobei der Profilbereich (20) in einer Rille (32) einer Lauffläche (30) geformt ist.

## Revendications

1. Bandage pneumatique (10), comprenant :
une région à motifs (20) formée au niveau d'une surface externe d'un bandage pneumatique (10) et incluant une base (22) ; et **caractérisé en ce que** le bandage pneumatique (10) comprend en outre :
plusieurs motifs unitaires (24, 26) formés dans la région à motifs (20), chacun des motifs unitaires (24, 26) incluant un point nodal (O1, O2) et des parties d'extension (24E , 26E) ayant une hauteur de projection (H1) à partir de la base (22) comprise entre 0,1 mm et 1,0 mm, les parties d'extension (24E, 26E) s'étendant dans plusieurs directions à partir du point nodal (O1, O2), dans une vue en plan ;
dans lequel un espacement (P) entre des points nodaux (O1, O2) de motifs unitaires adjacents (24, 26), parmi les plusieurs motifs unitaires (24, 26), est compris entre 0,2 mm et 1,0 mm ;
dans lequel chacun des motifs unitaires (24, 26) a une forme en astérisque et comporte des parties d'extension (24E, 26E) s'étendant radialement à partir du point nodal (O1, O2) ; et
dans lequel trois ou plusieurs des parties d'extension (24E, 26E) sont présentes dans chacun des motifs unitaires (24, 26), des angles respectifs formés entre les parties d'extension adjacentes (24E, 26E) étant identiques.

2. Bandage pneumatique (10) selon la revendication 1, dans lequel, en ce qui concerne les motifs unitaires adjacents (24, 26), dans une vue en plan, au moins une des parties d'extension (24E, 26E) de l'un des motifs unitaires (24,26) s'étend dans une direction différente de celle de toutes les parties d'extension (24E, 26E) d'un autre des motifs unitaires (24, 26).

3. Bandage pneumatique (10) selon les revendications 1 ou 2, dans lequel, dans une vue en plan, une longueur maximale (L) de chacun des motifs unitaires (24, 26) est supérieure à l'espacement (P) entre les points nodaux des motifs unitaires adjacents (24, 26).

4. Bandage pneumatique (10) selon l'une quelconque des revendications 1 à 3, dans lequel un des motifs unitaires (24, 26) et un motif unitaire adjacent (24, 26), parmi les plusieurs motifs unitaires (24, 26), sont connectés l'un à l'autre par une partie de connexion (34, 38, 42, 44, 52, 54).

5. Bandage pneumatique (10) selon la revendication 4, dans lequel la partie de connexion (34, 38, 42, 44, 52, 54) connecte les plusieurs motifs unitaires (24, 26) les uns aux autres, de sorte que les plusieurs motifs unitaires (24, 26) sont continus l'un avec l'autre, d'une extrémité vers une autre extrémité de la région à motifs (20).

6. Bandage pneumatique (10) selon les revendications 4 ou 5, dans lequel tous les motifs unitaires (24, 26) dans la région à motifs (20) communiquent avec une partie d'extrémité de la région à motifs (20).

7. Bandage pneumatique (10) selon les revendications 5 ou 6, dans lequel une forme en zigzag continue (36, 48, 50) est formée par les parties d'extension (24E, 26E) des motifs unitaires connectés (24, 26).

8. Bandage pneumatique (10) selon l'une quelconque des revendications 1 à 7, dans lequel les parties d'extension (24E, 26E) incluent chacune un sommet (23AS, 23BS, 23CS, 28AS, 28BS, 28CS) courbé de manière convexe au niveau d'un côté avant de la projection des parties d'extension (24 E, 26 E).

9. Bandage pneumatique (10) selon l'une quelconque des revendications 1 à 8, dans lequel au moins une des parties d'extension (24E, 26E) des motifs unitaires (24, 26) a une forme courbée.

10. Bandage pneumatique (10) selon la revendication 9, dans lequel ladite au moins une des parties d'extension (24E, 26E) ayant une forme courbée, est courbée de sorte qu'une extrémité avant de ladite au moins une des parties d'extension (24E, 26E) se rapproche de l'une des parties d'extension (24E, 25E) d'un autre des motifs unitaires (24, 26).

11. Bandage pneumatique (10) selon l'une quelconque des revendications 1 à 8, dans lequel la région à motifs (20) est formée au niveau d'une partie latérale du bandage pneumatique (12).

12. Bandage pneumatique (10) selon l'une quelconque des revendications 1 à 8, dans lequel la région à motifs (20) est formée dans une rainure (32) d'une bande de roulement (30).
